(19) Europäisches Patentamt
European Patent Office
Office européen des brevets

(11) **EP 4 365 052 A1**

(12) **EUROPEAN PATENT APPLICATION**
published in accordance with Art. 153(4) EPC

(43) Date of publication:
**08.05.2024   Bulletin 2024/19**

(21) Application number: **21953131.6**

(22) Date of filing: **12.08.2021**

(51) International Patent Classification (IPC):
**B60W 50/14** (2020.01)     **B60R 1/00** (2022.01)
**B60W 30/08** (2012.01)     **B60W 40/02** (2006.01)
**G06F 18/00** (2023.01)     **G08G 1/16** (2006.01)
**G06T 1/00** (2006.01)

(86) International application number:
**PCT/CN2021/112170**

(87) International publication number:
**WO 2023/015510 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.**
**Longgang**
**Shenzhen, Guangdong 518129 (CN)**

(72) Inventors:
• **HU, Wenxiao**
  **Shenzhen, Guangdong 518129 (CN)**
• **CHEN, Boyi**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COLLISION AVOIDANCE METHOD AND CONTROL APPARATUS**

(57)     This application provides an anti-collision method and a control apparatus. The method is applied to a vehicle (100) and includes: obtaining a speed of the vehicle (100) and a first distance between at least one tire of the vehicle (100) and an obstacle, where the first distance includes an actual distance between each of the at least one tire and a corresponding obstacle; and displaying an image on the vehicle (100) when the speed of the vehicle (100) is less than a first threshold and the first distance is less than a second threshold, where the image includes an image of the at least one tire and the corresponding obstacle. In the solution of this application, an image including at least one tire and a corresponding obstacle may be displayed, to help a driver learn of surrounding environment information, and assist the driver in passing through a complex environment such as a narrow road.

FIG. 6

**Description**

**TECHNICAL FIELD**

This application relates to the field of intelligent driving, and in particular, to an anti-collision method and a control apparatus.

**BACKGROUND**

With intelligent development of vehicles, the anti-collision technology has become a focus of research and development, especially in some complex driving environments, for example, when a person drives to park a vehicle, passing through a narrow road is a difficult scenario for a driver. The driver cannot precisely determine a location of a tire of the vehicle relative to an obstacle (for example, a road edge).

Currently, a radar and a driving image are main technologies for assisting traveling on a narrow road. However, the radar can only provide a warning function and cannot provide a specific road condition image to support the driver in making a driving decision. The driving image cannot display a vehicle side and a blind spot.

**SUMMARY**

This application provides an anti-collision method and a control apparatus, to display an image including at least one tire and a corresponding obstacle, to help a driver learn of surrounding environment information, and assist the driver in passing through a complex environment such as a narrow road.

According to a first aspect, an anti-collision method is provided. The method is applied to a vehicle, and the method includes:

obtaining a speed of the vehicle and a first distance between at least one tire of the vehicle and an obstacle, where the first distance includes an actual distance between each of the at least one tire and a corresponding obstacle; and
displaying an image on the vehicle when the speed of the vehicle is less than a first threshold and the first distance is less than a second threshold, where the image includes an image of the at least one tire and the corresponding obstacle.

According to the solution provided in this embodiment of this application, when the speed of the vehicle is less than the first threshold and the first distance is less than the second threshold, an image including at least one tire and a corresponding obstacle is displayed on the vehicle, to help a driver learn of surrounding environment information, and assist the driver in passing through a complex environment such as a narrow road.

With reference to the first aspect, in some possible implementations, the displaying the image on the vehicle includes:

if the corresponding obstacle is located on two sides of the vehicle, displaying images of the two sides of the vehicle on the vehicle; or
if the corresponding obstacle is located on one side of the vehicle, and a height of a chassis of the vehicle is less than a height of the corresponding obstacle, displaying an image of one side of the vehicle on the vehicle.

According to the solution provided in this embodiment of this application, different images are displayed based on a location of an obstacle. To be specific, if a corresponding obstacle is located on two sides of the vehicle, images of the two sides of the vehicle are displayed; or if a corresponding obstacle is located on one side of the vehicle, and the height of the chassis of the vehicle is less than a height of the corresponding obstacle, an image of one side of the vehicle is displayed. An image is pertinently displayed, so that attention of a driver can be gathered, to further assist the driver in passing through a complex environment.

With reference to the first aspect, in some possible implementations, the displaying the image on the vehicle when the speed of the vehicle is less than a first threshold and the first distance is less than a second threshold includes:

when the speed of the vehicle is less than the first threshold and the first distance is less than the second threshold, adjusting a photographing apparatus configured on the vehicle to shoot each tire and the corresponding obstacle; and
displaying the image on the vehicle based on a shot image of each tire and the corresponding obstacle.

With reference to the first aspect, in some possible implementations, the image further includes reminding information, and the reminding information indicates a collision risk degree of the at least one tire.

According to the solution provided in this embodiment of this application, in addition to displaying the image, the vehicle may further display the reminding information indicating a collision risk degree of at least one tire, to help a driver in passing through a complex environment.

With reference to the first aspect, in some possible implementations, the reminding information is located at a boundary of a display area in which the image is located, and the reminding information includes breathing lights of different colors.

According to the solution provided in this embodiment of this application, the reminding information is located at the boundary of the display area in which the image is located, and the reminding information includes breathing lights of different colors, so that attention of a driver can be effectively drawn, to help the driver immediately perceive an importance degree of a collision risk existing around the vehicle, thereby facilitating safe driving of the driver.

With reference to the first aspect, in some possible implementations, the reminding information is related to collision information, the collision information includes an expansion coefficient of the obstacle, and the expansion coefficient is related to a relative speed between the vehicle and the obstacle and a type of the obstacle.

With reference to the first aspect, in some possible implementations, a larger relative speed between the vehicle and the obstacle indicates a larger expansion coefficient, and a smaller relative speed between the vehicle and the obstacle indicates a smaller expansion coefficient.

With reference to the first aspect, in some possible implementations, a ratio of the first distance to the expansion coefficient is a second distance, and when the second distance is less than a third threshold and is greater than or equal to a fourth threshold, the reminding information includes a breathing light of a first color;

when the second distance is less than the fourth threshold and is greater than or equal to a fifth threshold, the reminding information includes a breathing light of a second color; or

when the second distance is less than the fifth threshold, the reminding information includes a breathing light of a third color.

With reference to the first aspect, in some possible implementations, the first distance and/or the second distance are/is a projection distance, and the projection distance is a projection distance between each tire and the corresponding obstacle in a direction perpendicular to a central axis of the vehicle.

According to the solution provided in this embodiment of this application, the first distance and/or the second distance may be the projection distance, which can further improve precision of evaluating a risk of collision between the vehicle and the obstacle, to reduce a possibility of collision.

With reference to the first aspect, in some possible implementations, the method further includes:
displaying, in a zoom-in manner, an image with a highest collision risk degree, where the image with a highest collision risk degree includes an image with a smallest first distance in the image.

According to the solution provided in this embodiment of this application, the image with a highest collision risk degree is displayed in a zoom-in manner, to help a driver more precisely learn of an environment with a highest collision risk degree around the vehicle. Further, the driver may perform a proper operation based on the zoomed-in image, to reduce a possibility of collision.

With reference to the first aspect, in some possible implementations, the displaying an image on the vehicle includes: displaying the image on a central display screen of the vehicle.

With reference to the first aspect, in some possible implementations, the central display screen further displays an inverse perspective mapping (inverse perspective mapping, IPM) image of the vehicle; and
a location at which the image that is of the at least one tire and the corresponding obstacle and that is displayed in the image is located is in a one-to-one correspondence with a location of at least one tire of the vehicle in the IPM image.

With reference to the first aspect, in some possible implementations, an image displayed in an upper left corner of the central display screen corresponds to an image of an upper left tire of the vehicle;

an image displayed in a lower left corner of the central display screen corresponds to an image of a lower left tire of the vehicle;
an image displayed in an upper right corner of the central display screen corresponds to an image of an upper right tire of the vehicle; and
an image displayed in a lower right corner of the central display screen corresponds to an image of a lower right tire of the vehicle.

According to the solution provided in this embodiment of this application, on the central display screen, the image displayed in the upper left corner corresponds to the image of the upper left tire of the vehicle (that is, a left front tire of the vehicle), the image displayed in the upper right corner corresponds to the image of the upper right tire of the vehicle (that is, a right front tire of the vehicle), the image displayed in the lower left corner corresponds to the image of

3

the lower left tire of the vehicle (that is, a left rear tire of the vehicle), and the image displayed in the lower right corner corresponds to the image of the lower right tire of the vehicle (that is, a right rear tire of the vehicle), so that a driver can clearly see the image corresponding to the tire, to further facilitate a subsequent operation based on the image.

With reference to the first aspect, in some possible implementations, the method further includes: exiting display of the image when the first distance is greater than or equal to the second threshold, and duration for displaying the image is greater than first duration.

According to the solution provided in this embodiment of this application, display of the image exits when the first distance is greater than or equal to the second threshold, and the duration for displaying the image is greater than the first duration, so that power consumption of the vehicle can be reduced. In addition, this helps a driver perform another operation.

According to a second aspect, a control apparatus is provided. The control apparatus includes: an obtaining module, configured to obtain a speed of a vehicle and a first distance between at least one tire of the vehicle and an obstacle, where the first distance includes an actual distance between each of the at least one tire and a corresponding obstacle; and a display module, configured to display an image when the speed of the vehicle is less than a first threshold and the first distance is less than a second threshold, where the image includes an image of the at least one tire and the corresponding obstacle.

With reference to the second aspect, in some possible implementations, the display module is specifically configured to:

if the corresponding obstacle is located on two sides of the vehicle, display images of the two sides of the vehicle; or if the corresponding obstacle is located on one side of the vehicle, and a height of a chassis of the vehicle is less than a height of the corresponding obstacle, display an image of one side of the vehicle.

With reference to the second aspect, in some possible implementations, the display module is specifically configured to:

when the speed of the vehicle is less than the first threshold and the first distance is less than the second threshold, adjust a photographing apparatus configured on the vehicle to shoot each tire and the corresponding obstacle; and display the image based on a shot image of each tire and the corresponding obstacle.

With reference to the second aspect, in some possible implementations, the image further includes reminding information, and the reminding information indicates a collision risk degree of the at least one tire.

With reference to the second aspect, in some possible implementations, the reminding information is located at a boundary of a display area in which the image is located, and the reminding information includes breathing lights of different colors.

With reference to the second aspect, in some possible implementations, the reminding information is related to collision information, the collision information includes an expansion coefficient of the obstacle, and the expansion coefficient is related to a relative speed between the vehicle and the obstacle and a type of the obstacle.

With reference to the second aspect, in some possible implementations, a larger relative speed between the vehicle and the obstacle indicates a larger expansion coefficient, and a smaller relative speed between the vehicle and the obstacle indicates a smaller expansion coefficient.

With reference to the second aspect, in some possible implementations, a ratio of the first distance to the expansion coefficient is a second distance, and when the second distance is less than a third threshold and is greater than or equal to a fourth threshold, the reminding information includes a breathing light of a first color;

when the second distance is less than the fourth threshold and is greater than or equal to a fifth threshold, the reminding information includes a breathing light of a second color; or when the second distance is less than the fifth threshold, the reminding information includes a breathing light of a third color.

With reference to the second aspect, in some possible implementations, the first distance and/or the second distance are/is a projection distance, and the projection distance is a projection distance between each tire and the corresponding obstacle in a direction perpendicular to a central axis of the vehicle.

With reference to the second aspect, in some possible implementations, the display module is specifically configured to: display, in a zoom-in manner, an image with a highest collision risk degree, where the image with a highest collision risk degree includes an image with a smallest first distance in the image.

With reference to the second aspect, in some possible implementations, the display module is further configured to display an inverse perspective mapping IPM image of the vehicle; and

a location at which the image that is of the at least one tire and the corresponding obstacle and that is displayed in the image is located is in a one-to-one correspondence with a location of at least one tire of the vehicle in the IPM image.

With reference to the second aspect, in some possible implementations, the display module is located on a central display screen of the vehicle.

With reference to the second aspect, in some possible implementations, an image displayed in an upper left corner of the central display screen corresponds to an image of an upper left tire of the vehicle;

an image displayed in a lower left corner of the central display screen corresponds to an image of a lower left tire of the vehicle;

an image displayed in an upper right corner of the central display screen corresponds to an image of an upper right tire of the vehicle; and

an image displayed in a lower right corner of the central display screen corresponds to an image of a lower right tire of the vehicle.

With reference to the second aspect, in some possible implementations, the apparatus further includes an exiting module, and

the exiting module is configured to exit display of the image when the first distance is greater than or equal to the second threshold, and duration for displaying the image is greater than first duration.

For beneficial effects of the second aspect, refer to the first aspect. Details are not described again.

According to a third aspect, a road controller is provided, including at least one memory and at least one processor. The at least one memory is configured to store a program, and the at least one processor is configured to run the program to implement the method according to the first aspect.

According to a fourth aspect, a chip is provided, including at least one processing unit and an interface circuit. The interface circuit is configured to provide program instructions or data for the at least one processing unit, and the at least one processing unit is configured to execute the program instructions to implement the method according to the first aspect or support function implementation of the apparatus according to the second aspect.

According to a fifth aspect, a computer-readable storage medium is provided. The computer-readable medium stores program code used to be executed by a device, and when the program code is executed by the device, the method according to the first aspect is implemented.

According to a sixth aspect, a terminal is provided, including the control apparatus according to the second aspect, the controller according to the third aspect, or the chip according to the fourth aspect. Further, the terminal may be an intelligent transportation device (such as a vehicle).

## BRIEF DESCRIPTION OF DRAWINGS

FIG. 1 is a block diagram of functions of a vehicle to which an embodiment of this application is applicable;

FIG. 2 is a schematic diagram of a self-driving system to which an embodiment of this application is applicable;

FIG. 3 is a schematic diagram of application of a self-driving vehicle based on a cloud-side instruction according to an embodiment of this application;

FIG. 4 is a block diagram of a self-driving system according to an embodiment of this application;

FIG. 5(a) to FIG. 5(c) show a group of GUIs of a vehicle according to an embodiment of this application;

FIG. 6 shows an anti-collision method according to an embodiment of this application;

FIG. 7(a) to FIG. 7(d) show another group of GUIs of a vehicle according to an embodiment of this application;

FIG. 8 is a schematic diagram of an obstacle before and after expansion relative to an ego vehicle according to an embodiment of this application;

FIG. 9(a) and FIG. 9(b) are schematic diagrams of projection of an obstacle and projection of a vehicle according to an embodiment of this application;

FIG. 10 is a schematic block diagram of a control apparatus according to an embodiment of this application; and

FIG. 11 is a schematic diagram of a structure of a controller according to an embodiment of this application.

## DESCRIPTION OF EMBODIMENTS

The following describes the technical solutions in this application with reference to the accompanying drawings.

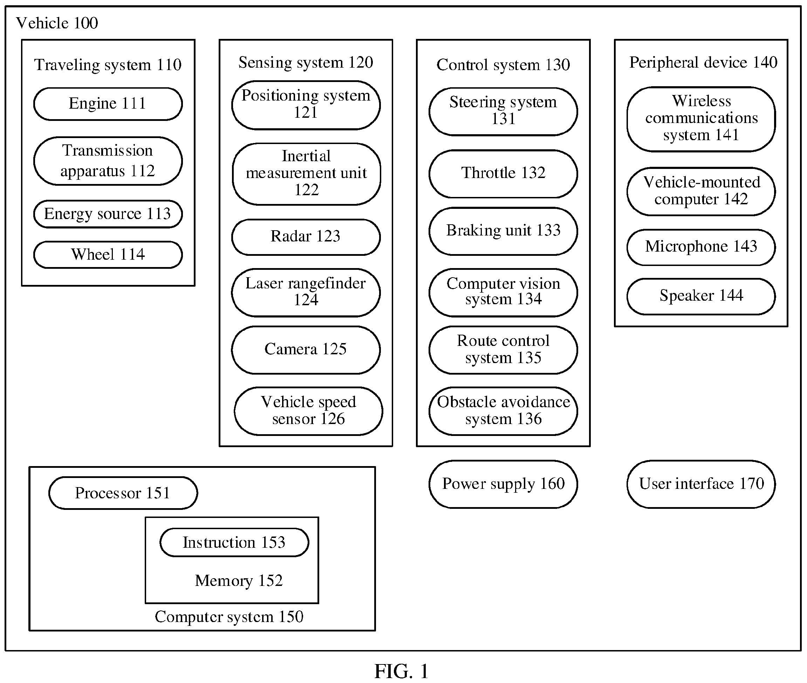

FIG. 1 is a block diagram of functions of a vehicle to which an embodiment of this application is applicable. A vehicle 100 may be a manually driven vehicle, or the vehicle 100 may be configured in a fully or partially self-driving mode.

In an example, the vehicle 100 can control itself when being in a self-driving mode, and through manual operations, can determine current states of the vehicle and a surrounding environment of the vehicle, determine possible behavior of at least one another vehicle in the surrounding environment, determine a confidence level corresponding to a possibility that the another vehicle performs the possible behavior, and control the vehicle 100 based on the determined information. When the vehicle 100 is in the self-driving mode, the vehicle 100 may be set to operate without interacting with a person.

The vehicle 100 may include various subsystems, for example, a traveling system 110, a sensing system 120, a control system 130, one or more peripheral devices 140, a power supply 160, a computer system 150, and a user interface 170.

Optionally, the vehicle 100 may include more or less subsystems, and each subsystem may include a plurality of elements. In addition, the subsystems and the elements of the vehicle 100 may be interconnected in a wired or wireless manner.

For example, the traveling system 110 may include a component configured to provide power motion to the vehicle 100. In an embodiment, the traveling system 110 may include an engine 111, atransmission apparatus 112, an energy source 113, and a wheel 114/a tire. The engine 111 may be an internal combustion engine, a motor, an air compression engine, or a combination of other types of engines, for example, a hybrid engine formed by a gasoline engine and a motor, or a hybrid engine formed by an internal combustion engine and an air compression engine. The engine 111 may convert the energy source 113 into mechanical energy.

For example, the energy source 113 includes gasoline, diesel oil, another oil-based fuel, propane, another compressed gas-based fuel, ethanol, a solar panel, a battery, and another power source. The energy source 113 may also provide energy to another system of the vehicle 100.

For example, the transmission apparatus 112 may include a gearbox, a differential, and a driving shaft. The transmission apparatus 112 may transfer mechanical power from the engine 111 to the wheel 114.

In an embodiment, the transmission apparatus 112 may further include another device, for example, a clutch. The driving shaft may include one or more shafts that can be coupled to one or more wheels 114.

For example, the sensing system 120 may include several sensors that sense information about a surrounding environment of the vehicle 100.

For example, the sensing system 120 may include a positioning system 121 (for example, a global positioning system (global positioning system, GPS), a BeiDou system, or another positioning system), an inertial measurement unit (inertial measurement unit, IMU) 122, a radar 123, a laser rangefinder 124, a camera 125, and a vehicle speed sensor 126. The sensing system 120 may further include sensors (for example, an in-vehicle air quality monitor, a fuel gauge, and an oil temperature gauge) of an internal system of the monitored vehicle 100. Sensor data from one or more of these sensors may be used to detect an object and corresponding features (a location, a shape, a direction, a speed, and the like) of the object. Such detection and recognition are key functions of a safe operation of the autonomous vehicle 100.

The positioning system 121 may be configured to estimate a geographical location of the vehicle 100. The IMU 122 may be configured to sense a change in a location and an orientation of the vehicle 100 based on inertial acceleration. In an embodiment, the IMU 122 may be a combination of an accelerometer and a gyroscope.

For example, the radar 123 may sense an object in the surrounding environment of the vehicle 100 by using radio information. In some embodiments, in addition to sensing the object, the radar 123 may be further configured to sense a speed and/or an advancing direction of the obj ect.

For example, the laser rangefinder 124 may sense, by using a laser, an object in an environment in which the vehicle 100 is located, for example, may measure a distance between the vehicle 100 and another object in the environment. In some embodiments, the laser rangefinder 124 may include one or more laser sources, a laser scanner, one or more detectors, and another system component.

For example, the camera 125 may be configured to capture a plurality of images of the surrounding environment of the vehicle 100. For example, the camera 125 may be a static camera or a video camera.

For example, the vehicle speed sensor 126 may be configured to measure a speed of the vehicle 100, for example, may measure the speed of the vehicle in real time. The measured vehicle speed may be transferred to the control system 130 to control the vehicle.

As shown in FIG. 1, the control system 130 controls operations of the vehicle 100 and the components of the vehicle 100. The control system 130 may include various elements, for example, may include a steering system 131, a throttle 132, a braking unit 133, a computer vision system 134, a route control system 135, and an obstacle avoidance system 136.

For example, the steering system 131 may be operated to adjust an advancing direction of the vehicle 100. For example, in an embodiment, the steering system may be a steering wheel system. The throttle 132 may be configured to control an operation speed of the engine 111 to control a speed of the vehicle 100.

For example, the braking unit 133 may be configured to control the vehicle 100 to decelerate, and the braking unit 133 may use friction to slow down the wheel 114. In another embodiment, the braking unit 133 may convert kinetic energy of the wheel 114 into a current. The braking unit 133 may also slow down a rotating speed of the wheel 114 in another form to control the speed of the vehicle 100.

As shown in FIG. 1, the computer vision system 134 may be operated to process and analyze an image captured by the camera 125 to recognize an object and/or a feature in the surrounding environment of the vehicle 100. The object and/or the feature may include traffic information, a road boundary, and an obstacle. The computer vision system 134 may use an object recognition algorithm, a structure from motion (structure from motion, SFM) algorithm, video tracking, and another computer vision technology. In some embodiments, the computer vision system 134 may be configured to: draw a map for an environment, track an object, estimate a speed of an object, and the like.

For example, the route control system 135 may be configured to determine a traveling route of the vehicle 100. In some embodiments, the route control system 135 may determine a traveling route for the vehicle 100 with reference to data from the sensors, the GPS, and one or more predetermined maps.

As shown in FIG. 1, the obstacle avoidance system 136 may be configured to recognize, evaluate, and avoid or cross a potential obstacle in another manner in an environment of the vehicle 100.

In an instance, the control system 130 may additionally or alternatively include components other than those shown and described, or may delete some of the components shown above.

As shown in FIG. 1, the vehicle 100 may interact with an external sensor, another vehicle, another computer system, or a user by using the peripheral device 140. The peripheral device 140 may include a wireless communications system 141, a vehicle-mounted computer 142, a microphone 143, and/or a speaker 144.

In some embodiments, the peripheral device 140 may provide a means for interaction between the vehicle 100 and the user interface 170. For example, the vehicle-mounted computer 142 may provide information for a user of the vehicle 100. The user interface 116 may further be configured to operate the vehicle-mounted computer 142 to receive a user input, and the vehicle-mounted computer 142 may be operated through a touchscreen. In another case, the peripheral device 140 may provide a means for communication between the vehicle 100 and another device in the vehicle. For example, the microphone 143 may receive audio (for example, a voice command or another audio input) from the user of the vehicle 100. Similarly, the speaker 144 may output audio to the user of the vehicle 100.

As illustrated in FIG. 1, the wireless communications system 141 may communicate wirelessly with one or more devices directly or through a communications network. For example, the wireless communications system 141 may use 3G cellular communication such as code division multiple access (code division multiple access, CDMA), EVDO, a global system for mobile communications (global system for mobile communications, GSM)/a general packet radio service (general packet radio service, GPRS), 4G cellular communication such as long term evolution (long term evolution, LTE), or 5G cellular communication. The wireless communications system 141 may communicate with a wireless local area network (wireless local area network, WLAN) by using wireless fidelity (wireless fidelity, Wi-Fi).

In some embodiments, the wireless communications system 141 may directly communicate with a device by using an infrared link, Bluetooth, or a ZigBee protocol (ZigBee). Other wireless protocols, for example, various vehicle communications systems such as the wireless communications system 141, may include one or more dedicated short range communications (dedicated short range communications, DSRC) devices. These devices may include public and/or private data communication between vehicles and/or roadside stations.

As shown in FIG. 1, the power supply 160 may provide power to various components of the vehicle 100. In an embodiment, the power supply 160 may be a rechargeable lithium-ion or lead-acid battery. One or more battery packs of this type of battery may be configured as a power supply to supply power to various components of the vehicle 100. In some embodiments, the power supply 160 and the energy source 113 may be implemented together, for example, as in some battery electric vehicles.

For example, some or all of the functions of the vehicle 100 may be controlled by the computer system 150. The computer system 150 may include at least one processor 151, and the processor 151 executes an instruction 153 stored in, for example, a non-transient computer-readable medium in a memory 152. The computer system 150 may alternatively be a plurality of computing devices that control individual components or subsystems of the vehicle 100 in a distributed manner.

For example, the processor 151 may be any conventional processor, such as a commercially available central processing unit (central processing unit, CPU).

Optionally, the processor may be a dedicated device such as an application-specific integrated circuit (application-specific integrated circuit, ASIC) or another hardware-based processor. Although FIG. 1 functionally illustrates the processor, the memory, and other elements of a computer in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer. Therefore, reference to the processor or the computer are understood as including reference to a set of processors or computers or memories that may or may not be operated in parallel. Different from using a single processor to perform the steps described herein, some components such as a steering component and a deceleration component each may include a processor of the component. The processor performs only calculation related to a component-specific function.

In the aspects described herein, the processor may be located far away from the vehicle and wirelessly communicate with the vehicle. In another aspect, some of the processes described herein are performed on the processor disposed in the vehicle, and other processes are performed by a remote processor, including performing a step necessary for single manipulation.

In some embodiments, the memory 152 may include the instruction 153 (for example, program logic), and the instruction 153 may be used by the processor 151 to perform various functions of the vehicle 100, including the functions described above. The memory 152 may also include additional instructions, for example, include instructions for sending data to, receiving data from, interacting with, and/or controlling one or more of the traveling system 110, the sensing system 120, the control system 130, or the peripheral device 140.

For example, in addition to the instruction 153, the memory 152 may further store data, for example, a road map, route information, a location, a direction, a speed, and other such vehicle data of the vehicle, and other information. Such information may be used by the vehicle 100 and the computer system 150 during operation of the vehicle 100 in an autonomous mode, a semi-autonomous mode, and/or a manual mode.

As shown in FIG. 1, the user interface 170 may be configured to provide information to or receive information from the user of the vehicle 100. Optionally, the user interface 170 may be included in one or more input/output devices in a set of peripheral devices 140, for example, the wireless communications system 141, the vehicle-mounted computer 142, the microphone 143, and the speaker 144.

In this embodiment of this application, the computer system 150 may control the functions of the vehicle 100 based on inputs received from various subsystems (for example, the traveling system 110, the sensing system 120, and the control system 130) and the user interface 170. For example, the computer system 150 may use an input from the control system 130 to control the braking unit 133 to avoid an obstacle that is detected by the sensing system 120 and the obstacle avoidance system 136. In some embodiments, the computer system 150 may be operated to provide control over many aspects of the vehicle 100 and the subsystems of the vehicle.

Optionally, one or more of the foregoing components may be installed separating from or associated with the vehicle 100. For example, the memory 152 may exist partially or completely separating from the vehicle 100. The foregoing components may be communicatively coupled together in a wired manner and/or a wireless manner.

Optionally, the foregoing components are merely examples. In actual application, a component in each of the foregoing modules may be added or deleted based on an actual requirement. FIG. 1 should not be understood as a limitation on this embodiment of this application.

Optionally, the vehicle 100 may be a self-driving vehicle traveling on a road, and may recognize an object in the surrounding environment of the vehicle to determine adjustment of a current speed. The obj ect may be another vehicle, a traffic control device, or another type of obj ect. In some examples, each recognized object may be considered independently and may be used to determine, based on features of each object, such as a current speed of the object, acceleration of the object, or a spacing between the object and the vehicle, a speed to be adjusted by the self-driving vehicle.

Optionally, the vehicle 100 or a computing device (for example, the computer system 150, the computer vision system 134, or the memory 152 in FIG. 1) associated with the vehicle 100 may predict behavior of the recognized object based on the feature of the recognized object and a state (for example, traffic, rain, or ice on a road) of the surrounding environment.

Optionally, the recognized objects depend on behavior of each other. Therefore, all the recognized objects may be considered together to predict behavior of a single recognized object. The vehicle 100 can adjust the speed of the vehicle 100 based on the predicted behavior of the recognized object. In other words, the self-driving vehicle can determine, based on the predicted behavior of the object, that the vehicle needs to be adjusted (for example, acceleration, deceleration, or stop) to a stable state. In this process, another factor may also be considered to determine the speed of the vehicle 100, for example, a horizontal location of the vehicle 100 on a road on which the vehicle travels, curvature of the road, and proximity between a static object and a dynamic obj ect.

In addition to providing an instruction for adjusting the speed of the self-driving vehicle, the computing device may further provide an instruction for modifying a steering angle of the vehicle 100, so that the self-driving vehicle follows a given track and/or maintain safe horizontal and vertical distances from an object (for example, a car in a neighboring lane on a road) near the self-driving vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, and the like. This is not specifically limited in this embodiment of this application.

In a possible implementation, the vehicle 100 shown in FIG. 1 may be a self-driving vehicle. The following describes a self-driving system in detail.

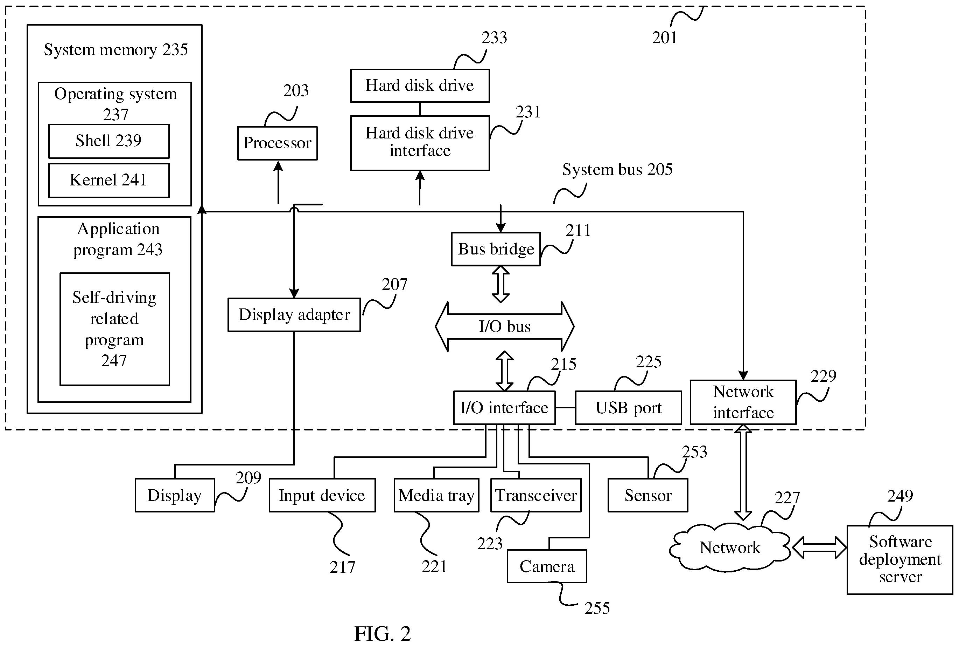

FIG. 2 is a schematic diagram of a self-driving system to which an embodiment of this application is applicable.

The self-driving system shown in FIG. 2 includes a computer system 201. The computer system 201 includes a processor 203, and the processor 203 is coupled to a system bus 205. The processor 203 may be one or more processors, and each processor may include one or more processor cores. A display adapter (video adapter) 207 is included, and the display adapter may drive a display 209. The display 209 is coupled to the system bus 205, and the display 209 may display an image. The system bus 205 may be coupled to an input/output (I/O) bus 213 by using a bus bridge 211, and an I/O interface 215 is coupled to the I/O bus. The I/O interface 215 communicates with a plurality of I/O devices, such as an input device 217 (for example, a keyboard, a mouse, or a touchscreen) and a media tray (media tray) 221 (for example, a CD-ROM or a multimedia interface). A transceiver 223 may send and/or receive radio communication information, and a camera 255 may capture a static and dynamic digital video image. An interface connected to the I/O interface 215 may be a USB port 225.

The processor 203 may be any conventional processor, for example, a reduced instruction set computing (reduced instruction set computer, RISC) processor, a complex instruction set computing (complex instruction set computer, CISC) processor, or a combination thereof.

Optionally, the processor 203 may be a dedicated apparatus such as an application-specific integrated circuit (ASIC). The processor 203 may be a neural-network processing unit or a combination of the neural-network processing unit and the foregoing conventional processor.

Optionally, in some embodiments, the computer system 201 may be located in a place far away from a self-driving vehicle, and may wirelessly communicate with the self-driving vehicle. In another aspect, some of the processes described in this application are performed on a processor disposed inside the self-driving vehicle, and other processes are performed by a remote processor, including performing a step necessary for single manipulation.

The computer system 201 may communicate with a software deployment server 249 through a network interface 229. The network interface 229 is a hardware network interface, for example, a network interface card. A network 227 may be an external network, for example, the Internet, or may be an internal network, for example, an Ethernet or a virtual private network (virtual private network, VPN). Optionally, the network 227 may alternatively be a wireless network, for example, a Wi-Fi network or a cellular network.

As shown in FIG. 2, a hard disk drive interface is coupled to the system bus 205, a hardware drive interface 231 may be connected to a hard disk drive 233, and a system memory 235 is coupled to the system bus 205. Data running in the system memory 235 may include an operating system 237 and an application program 243. The operating system 237 may include a shell (shell) 239 and a kernel (kernel) 241. The shell 239 is an interface between a user and the kernel (kernel) of the operating system. The shell may be an outermost layer of the operating system. The shell can manage interaction between the user and the operating system, for example, waiting for an input of the user, interpreting the input of the user to the operating system, and processing a variety of output results of the operating system. The kernel 241 may include components in the operating system that are configured to manage a memory, a file, a peripheral device, and a system resource. The kernel directly interacts with hardware. The kernel of the operating system usually runs processes, provides communication between the processes, and provides CPU time slice management, interruption, memory management, I/O management, and the like. The application program 243 includes programs for controlling self-driving of a vehicle, for example, a program that manages interaction between a self-driving vehicle and a road obstacle, a program that controls a route or a speed of the self-driving vehicle, a program that controls interaction between the self-driving vehicle and another self-driving vehicle on a road. The application program 243 also exists on a system of the software deployment server 249. In an embodiment, the computer system 201 may download the application program from the software deployment server 249 when a self-driving related program 247 needs to be executed.

For example, the application program 243 may alternatively be a program for interaction between the self-driving vehicle and a lane line on the road, that is, a program that can track the lane line in real time.

For example, the application program 243 may alternatively be a program that controls the self-driving vehicle to perform automatic parking.

For example, a sensor 253 may be associated with the computer system 201, and the sensor 253 may be configured to detect a surrounding environment of the computer 201.

For example, the sensor 253 may detect a lane on a road, for example, may detect a lane line, and can track, in real time, a lane line change in a specific range in front of the vehicle in a process of vehicle movement (for example, the vehicle is being in traveling). For another example, the sensor 253 may detect an animal, a vehicle, an obstacle, a pedestrian crosswalk, and the like. Further, the sensor may detect surrounding environments of the foregoing objects such as the animal, the vehicle, the obstacle, and the pedestrian crosswalk, for example, the surrounding environment of the animal such as another animal that appears around the animal, a weather condition, and brightness of the surrounding environment.

Optionally, if the computer 201 is located on the self-driving vehicle, the sensor may be a camera, an infrared sensor, a chemical detector, a microphone, or the like.

For example, in a lane line tracking scenario, the sensor 253 may be configured to detect a lane line in front of the vehicle, so that the vehicle can sense a lane change in a traveling process, to perform real-time planning and adjustment on traveling of the vehicle based on the lane change.

For example, in an automatic parking scenario, the sensor 253 may be configured to detect sizes or locations of a parking spot around the vehicle and a surrounding obstacle, so that the vehicle can sense a distance between the parking spot and the surrounding obstacle, and perform collision detection during parking, to prevent the vehicle from colliding with the obstacle.

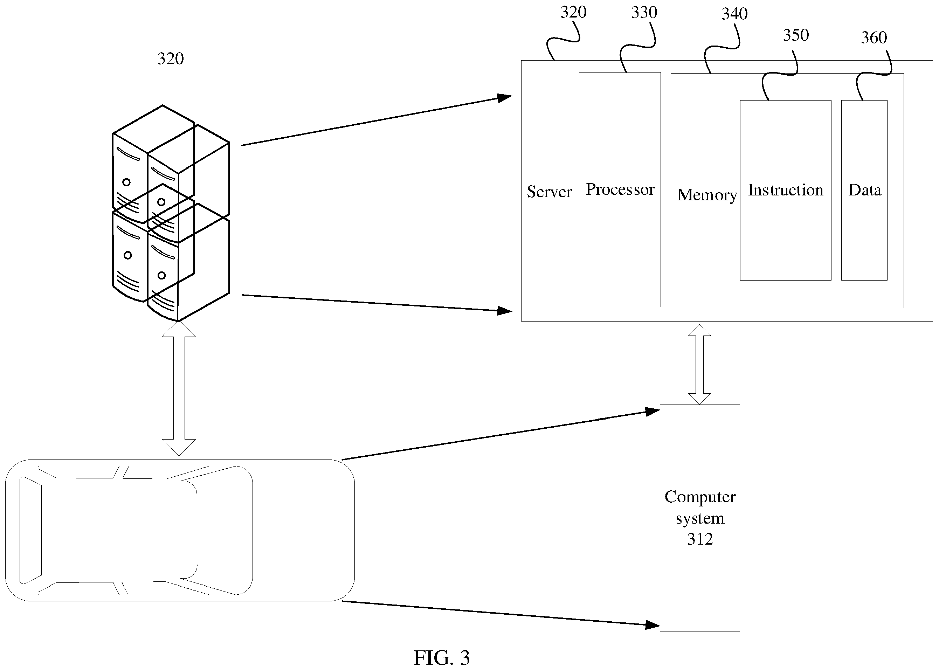

In an example, the computer system 150 shown in FIG. 1 may further receive information from another computer system or transfer information to another computer system. Alternatively, sensor data collected from the sensing system 120 of the vehicle 100 may be transferred to another computer for processing, and FIG. 3 is used as an example below for description.

FIG. 3 is a schematic diagram of application of a self-driving vehicle based on a cloud-side instruction according to an embodiment of this application.

As shown in FIG. 3, data from a computer system 312 may be transferred through a network to a cloud-side server 320 for further processing. The network and an intermediate node may include various configurations and protocols, including the Internet, the World Wide Web, an intranet, a virtual private network, a wide area network, a local area network, a private network that uses proprietary communications protocols of one or more companies, an Ethernet, Wi-Fi, HTTP, and various combinations thereof. This communication can transfer data to another computer, and transfer data from another computer to any device, such as a modem and a wireless interface.

In an example, the server 320 may include a server, such as a load balancing server cluster, that has a plurality of computers, and exchange information with different nodes of the network for the purpose of receiving data from the computer system 312, and processing and transferring the data. The server may be configured similar to the computer system 312, and has a processor 330, a memory 340, an instruction 350, and data 360.

For example, the data 360 of the server 320 may include information related to a road condition around the vehicle. For example, the server 320 may receive, detect, store, update, and transfer information related to a road condition of the vehicle.

For example, the information related to the road condition around the vehicle includes information about another vehicle and information about an obstacle around the vehicle.

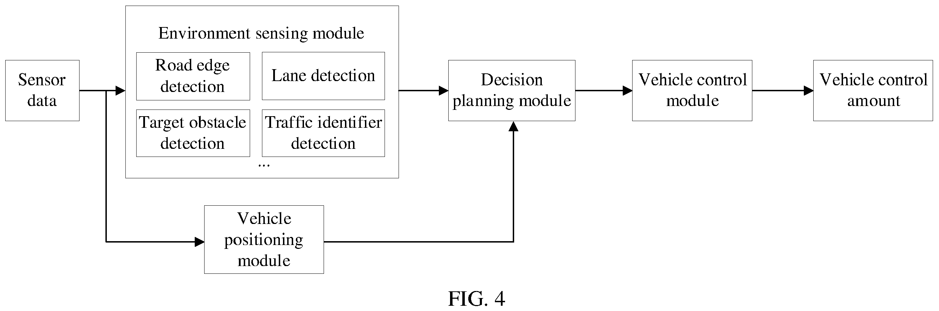

FIG. 4 is a framework diagram of a self-driving system according to an embodiment of this application. Some modules in the framework diagram of the self-driving system may be located in the processor 203 shown in FIG. 2.

As shown in FIG. 4, the self-driving system may include an environment sensing module, a vehicle positioning module, a decision planning module, and a vehicle control module.

The environment sensing module may perform environment detection, such as road edge detection, lane line detection, target obstacle detection, and traffic identifier detection, based on sensor data obtained by a sensor, to determine a driving environment in which a vehicle is currently located. The vehicle positioning module may determine a current traveling posture (a location, a traveling speed, and the like) of the vehicle based on the sensor data obtained by the sensor. The decision planning module may determine a traveling policy (a traveling angle, a traveling speed, and the like) of the vehicle at a next moment based on results output by the environment sensing module and the vehicle positioning module. The vehicle control module may determine a vehicle control amount (a parameter that needs to be adjusted for each component) based on a form policy, to implement safe driving.

For ease of understanding, the following specifically describes the anti-collision method provided in the embodiments of this application with reference to the accompanying drawings.

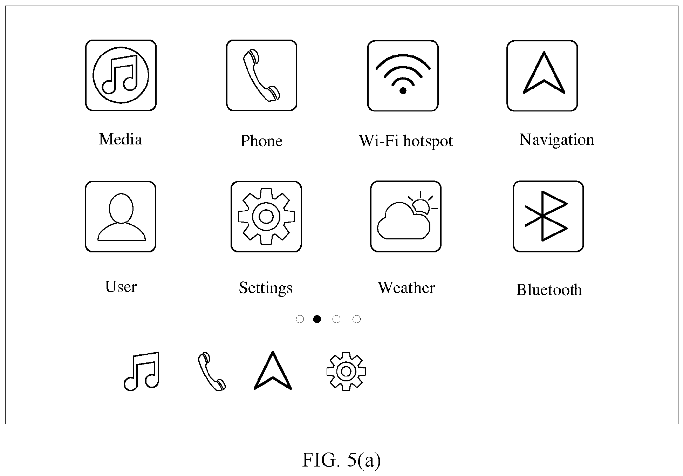

FIG. 5(a) to FIG. 5(c) show a group of graphical user interfaces (graphical user interface, GUI) of a vehicle, and FIG. 5(a) to FIG. 5(c) show an anti-collision method of the vehicle.

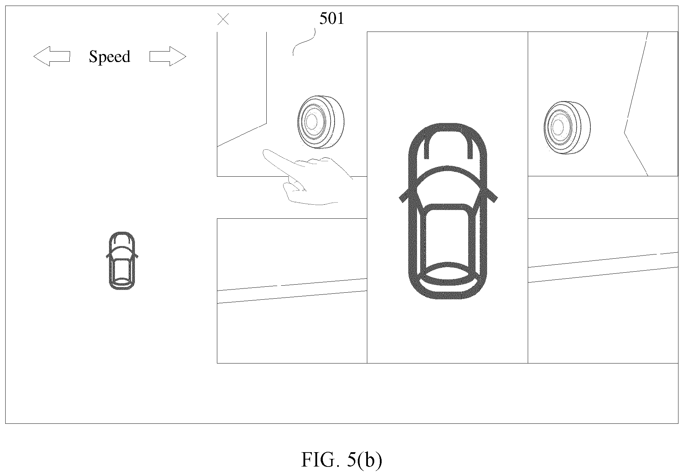

Refer to a GUI shown in FIG. 5(a), the GUI may be a display interface of the vehicle in a normal traveling state. When the vehicle detects that a vehicle speed of the vehicle is less than 10 km/h, and an actual distance between at least one tire of the vehicle and an obstacle is less than 200 cm, a central display screen may display an image and/or an inverse perspective mapping (inverse perspective mapping, IPM) image, and display a GUI shown in FIG. 5(b).

Refer to the GUI shown in FIG. 5(b), it can be learned that an image of the vehicle shown in the middle of a right side is an IPM image, four rectangular boxes around the IPM image show images, and the images include images around four tires. It can be learned from the figure that a left front tire and a right front tire of the vehicle each have an obstacle. In some embodiments, the image may alternatively include only images of the left front tire and the right front tire.

If the vehicle is in a self-driving state, the central display screen may display the image and/or the IPM image, or may not display the image and/or the IPM image. Regardless of whether the image and/or the IPM image are/is displayed, the vehicle can perform an operation based on the image and/or the IPM image, so that the vehicle safely bypasses the obstacle. In addition, the "self-driving" herein may be fully self-driving, or may be manually operated self-driving. A level of self-driving may be determined based on a grading standard of the society of automotive engineers (society of automotive engineers, SAE), and may be classified into a level L0, a level L1, a level L2, a level L3, a level L4, and a level L5. The level L0 means that there is no self-driving, and a vehicle is completely operated by a driver throughout a whole process. The level L1 is driving support and has a driving assistance function. A vehicle is mainly operated by a driver, and support is provided for one of a steering wheel operation and a deceleration operation based on a driving environment. The level L2 is partial automation. A vehicle equipped with an intelligent driving assistance system of the level L2 has a function of partially self-driving, and a driver can take a short break based on a driving environment. During driving, the driver further needs to focus on a traffic condition of a road and prepare for receiving manual driving at any time. The level L3 is condition-based automation. Under a specific condition, the system completes all driving operations and a driver provides an adaptive response based on a system request. The level L4 is self-driving at a high degree. An intelligent system of the level L4 is self-driving in a real sense, and the system can complete all driving operations. A driver can be completely freed from hands during traveling on a road in a specific condition. The level L5 is fully self-driving, and the level really reaches that no person participates in a driving operation. A driver can sleep, play a game, chat, and drink tea in the vehicle.

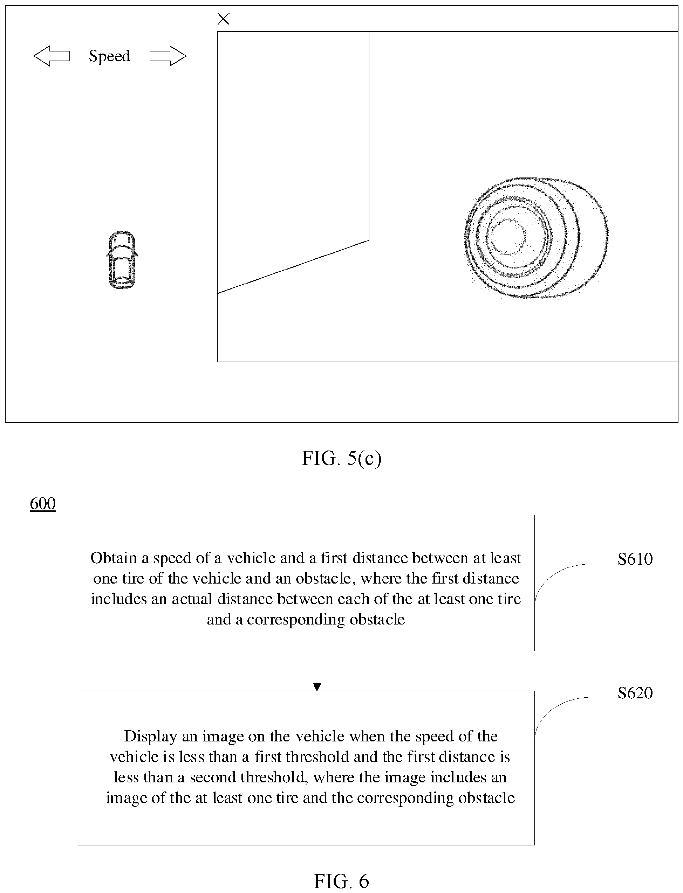

If the vehicle is in a manual driving state, a driver may choose to manually zoom in a specific image based on a collision risk degree. For example, if the driver determines that a collision risk degree of the left front tire is high, the driver may tap an image in an upper left part. After detecting an operation of tapping an icon 501 by the driver, the vehicle may display a GUI shown in FIG. 5(c).

Refer to the GUI shown in FIG. 5(c), an enlarged image of the left front tire is displayed in the interface. In this case, the driver may perform an operation based on the enlarged image of the left front tire, so that the vehicle safely bypasses the obstacle. After the obstacle is safely bypassed, the central display screen may automatically exit display of the image, or the driver may perform a manual operation to exit display of the image. For example, the driver may tap an icon "×" displayed in the figure.

The following describes the solutions of this application in detail with reference to FIG. 6. FIG. 6 shows an anti-collision method 600 according to an embodiment of this application. The method 600 may be applied to a vehicle, and the method 600 may include steps S610 and S620.

S610: Obtain a speed of the vehicle and a first distance between at least one tire of the vehicle and an obstacle, where the first distance includes an actual distance between each of the at least one tire and a corresponding obstacle.

In this embodiment of this application, the speed of the vehicle may be detected by using a speed sensor. Certainly, in some embodiments, the speed of the vehicle may alternatively be detected by using another apparatus that can detect a vehicle speed.

In this embodiment of this application, the first distance includes an actual distance between each of the at least one tire of the vehicle and a corresponding obstacle. To be specific, the first distance may include an actual distance between one tire of the vehicle and a corresponding obstacle, or may include an actual distance between each of a plurality of tires of the vehicle and a corresponding obstacle.

In addition, the corresponding obstacle in this embodiment of this application may be understood as an obstacle closest to the tire. In other words, the obstacle in this embodiment of this application may include only one obstacle (for example, a corner of a wall). It is assumed that the obstacle is located on a left side of the vehicle, and the vehicle needs to turn left to travel. In this case, obstacles corresponding to tires on the left side (including a front tire and a rear tire on the left side) of the vehicle are a same obstacle.

The obstacle in this embodiment of this application may alternatively include a plurality of obstacles. It is assumed that the plurality of obstacles are separately located near the tires of the vehicle. For example, an actual distance between one of the plurality of obstacles and a corresponding tire may be any value between 10 cm and 200 cm.

S620: Display an image on the vehicle when the speed of the vehicle is less than a first threshold and the first distance is less than a second threshold, where the image includes an image of the at least one tire and the corresponding obstacle.

In this embodiment of this application, the first threshold may be 10 km/h described above, and the second threshold may be 200 cm described above. However, it should be understood that the value shown for the first threshold and/or the value shown for the second threshold are/is merely examples for description, and may be other values, and should not constitute a special limitation on this application.

The image in this embodiment of this application includes an image of at least one tire and a corresponding obstacle, such as the images shown in the four rectangular boxes around the IPM image shown in FIG. 5(b). It may be understood that, in some embodiments, the image may include an image of one tire and a corresponding obstacle or images of a plurality of tires and corresponding obstacles.

Optionally, in some embodiments, the displaying an image on the vehicle includes: displaying the image on a central display screen of the vehicle. In some other embodiments, the image may alternatively be displayed in other forms, such as augmented reality (augmented reality, AR), virtual reality (virtual reality, VR), and head-up display (head-up display, HUD).

According to the solution provided in this embodiment of this application, when the speed of the vehicle is less than the first threshold and the first distance is less than the second threshold, an image including at least one tire and a corresponding obstacle is displayed on the vehicle, to help a driver learn of surrounding environment information, and assist the driver in passing through a complex environment such as a narrow road.

As described in step S620 above, when the speed of the vehicle is less than the first threshold and the first distance is less than the second threshold, the image is displayed on the vehicle. Image display is related to a location of an obstacle. For details, refer to the following.

The displaying an image on the vehicle includes:

if the corresponding obstacle is located on two sides of the vehicle, the central display screen displays images of the two sides of the vehicle; or

if the corresponding obstacle is located on one side of the vehicle, and a height of a chassis of the vehicle is less than a height of the corresponding obstacle, the central display screen displays an image of one side of the vehicle.

In this embodiment of this application, an example in which an image is displayed on the central display screen of the vehicle is used. If a corresponding obstacle is located on two sides of the vehicle, for example, when the vehicle passes through a width-limited pier or a width-limited door, the central display screen may display images of the two sides of the vehicle; or if a corresponding obstacle is located on one side of the vehicle, and the height of the chassis of the vehicle is less than a height of the corresponding obstacle, for example, when the vehicle is near a road edge, the central display screen may display an image of one side of the vehicle.

For example, if the vehicle passes through a width-limited pier, where a width of the width-limited pier is 2.5 m, and a width of the vehicle is 2.0 m, because the width of the width-limited pier is greater than the width of the vehicle by only 0.5 m, which is equivalent to that widths reserved on the two sides of the vehicle are respectively 0.25 m, the central display screen may display images of the two sides of the vehicle. In this case, when passing through the width-limited pier, the vehicle may refer to the images displayed on the central display screen.

If the corresponding obstacle is located on one side of the vehicle, two cases may be included. For example, when the vehicle approaches a road edge, where it is assumed that a height of the road edge is 30 cm, and the height of the chassis of the vehicle is 14 cm from the ground, because the height of the chassis of the vehicle is less than the height of the road edge, a housing of the vehicle may touch the road edge (for example, a vehicle head or a vehicle tail may touch the road edge during parallel parking) if slight carelessness occurs, causing damage to the vehicle. Therefore, the central display screen may display an image of one side of the vehicle, that is, display an image including the road edge side (it is assumed that there is no obstacle on the other side of the vehicle). In this case, when approaching the road edge, the vehicle may approach the road edge by referring to the image displayed on the central display screen. For another example, an obstacle encountered by the vehicle on a road surface is, for example, a large stone, where a height of the stone is 20 cm, and the height of the chassis of the vehicle is 14 cm from the ground. If the vehicle travels over the stone, the stone may scratch the chassis of the vehicle. Therefore, the central display screen may display an image of one side of the vehicle, that is, display an image including the stone side (it is assumed that there is no obstacle on the other side of the vehicle). In this case, when passing by the stone, the vehicle may pass by the stone by referring to the image displayed on the central display screen.

In some other embodiments, damage to another part of the vehicle (for example, an outer side of a hub of the vehicle, which may also be referred to as a tire of the vehicle) may be unrelated to the height of the chassis of the vehicle and a height of an obstacle. For example, when the vehicle approaches a road edge, assuming that the height of the chassis of the vehicle is 14 cm from the ground, regardless of whether a height of the road edge is greater than 14 cm or less than or equal to 14 cm, the outer side of the hub of the vehicle may touch the road edge, causing damage to the vehicle.

According to the solution provided in this embodiment of this application, different images are displayed based on a location of an obstacle. To be specific, if a corresponding obstacle is located on two sides of the vehicle, images of the two sides of the vehicle are displayed; or if a corresponding obstacle is located on one side of the vehicle, and the height of the chassis of the vehicle is less than a height of the corresponding obstacle, an image of one side of the vehicle is displayed. An image is pertinently displayed, so that attention of a driver can be gathered, to further assist the driver in passing through a complex environment.

Optionally, in some embodiments, the displaying the image on the vehicle when the speed of the vehicle is less than a first threshold and the first distance is less than a second threshold includes:

when the speed of the vehicle is less than the first threshold and the first distance is less than the second threshold, adjusting a photographing apparatus configured on the vehicle to shoot each tire and the corresponding obstacle; and displaying the image on the vehicle based on a shot image of each tire and the corresponding obstacle.

The photographing apparatus in this embodiment of this application may be a camera. The camera may be a plurality of cameras. The camera may be located at a rear-view mirror, and an angle of view of the camera may be greater than 180°, to shoot environment information around each tire as much as possible.

However, it should be understood that a location of the photographing apparatus is not specifically limited, and this application can be applied to any case in which environment information of each tire and a corresponding obstacle can be shot.

It is mentioned above that, an image is displayed on the vehicle when the speed of the vehicle is less than the first threshold and the first distance is less than the second threshold, where the image includes an image of at least one tire and a corresponding obstacle. In addition, to further facilitate an operation of a driver, the image may further include other information. For details, refer to the following.

Optionally, in some embodiments, the image further includes reminding information, and the reminding information indicates a collision risk degree of the at least one tire.

The image in this embodiment of this application may further include reminding information indicating a collision risk degree of at least one tire. It may be understood that in a same environment, collision risk degrees of tires of the vehicle may be the same or may be different.

As described above, when the vehicle passes through a width-limited pier or a width-limited door, assuming that a distance between an obstacle and each of tires on the two sides of the vehicle is 0.25 m, it may be considered that the tires on the two sides of the vehicle have a same collision risk degree; or assuming that a distance between a tire on one side of the vehicle and the obstacle is 0.3 m, and a distance between a tire on the other side and the obstacle is 0.2 m, it may be considered that a collision risk degree of the tire on the side with the distance of 0.2 m is higher than a collision risk degree of the tire on the side with the distance of 0.3 m.

When the vehicle approaches a road edge, assuming that the height of the chassis of the vehicle is 14 cm, and if there is no obstacle on the other side of the vehicle, regardless of whether a height of the road edge is greater than 14 cm or less than or equal to 14 cm, it may be considered that a collision risk degree of a tire near the road edge side is higher; or if there is a child on the other side of the vehicle, it may be considered that a collision risk degree of a tire on the side with the child is higher.

According to the solution provided in this embodiment of this application, in addition to displaying the image, the vehicle may further display the reminding information indicating a collision risk degree of at least one tire, to help a driver in passing through a complex environment.

Optionally, in some embodiments, the reminding information is located at a boundary of a display area in which the image is located, and the reminding information includes breathing lights of different colors.

The reminding information in this embodiment of this application may include breathing lights of different colors, and each color may represent a corresponding tire collision risk. In the following, a tire collision risk corresponding to red>a tire collision risk corresponding to orange>a tire collision risk corresponding to yellow.

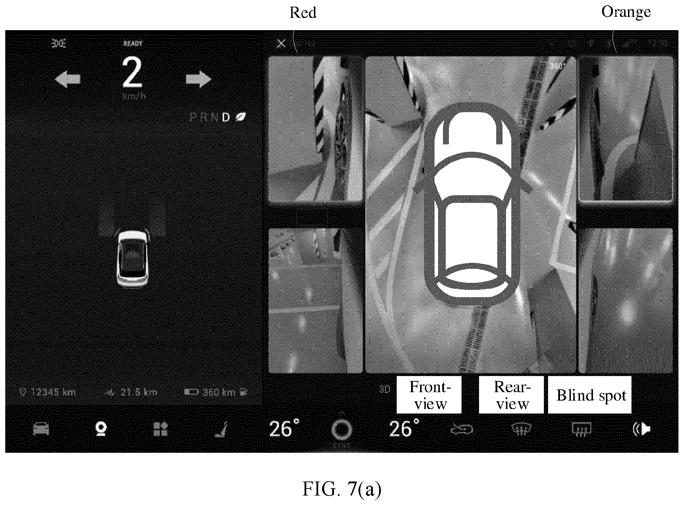

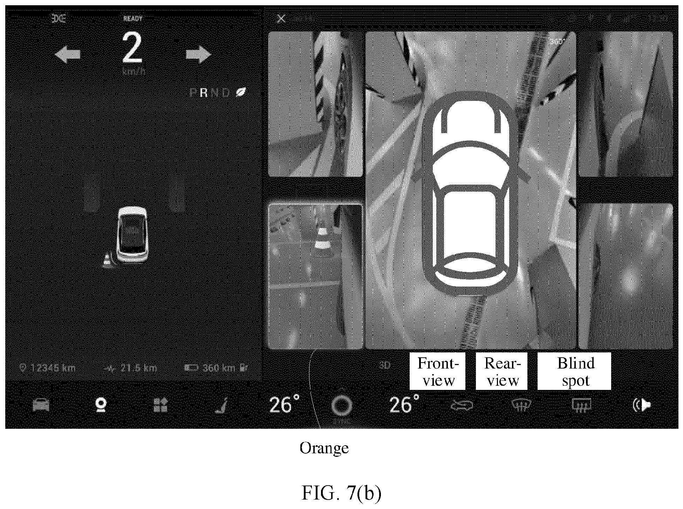

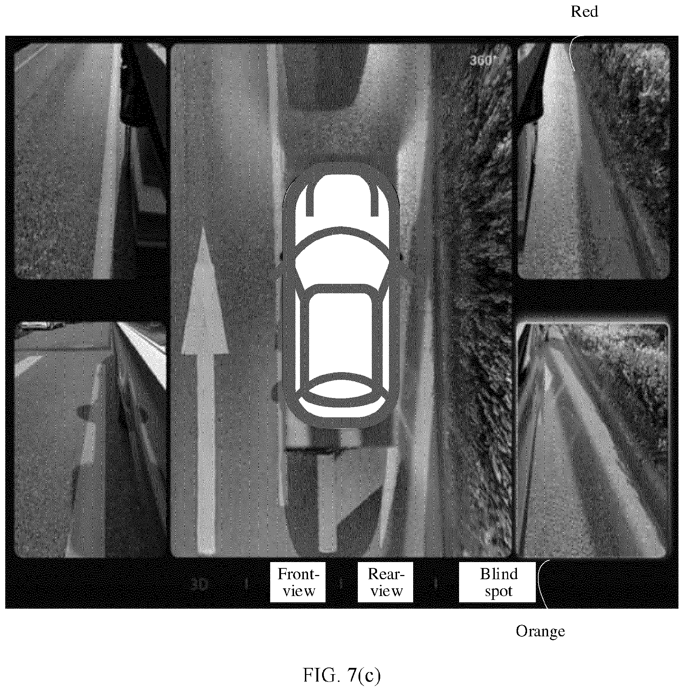

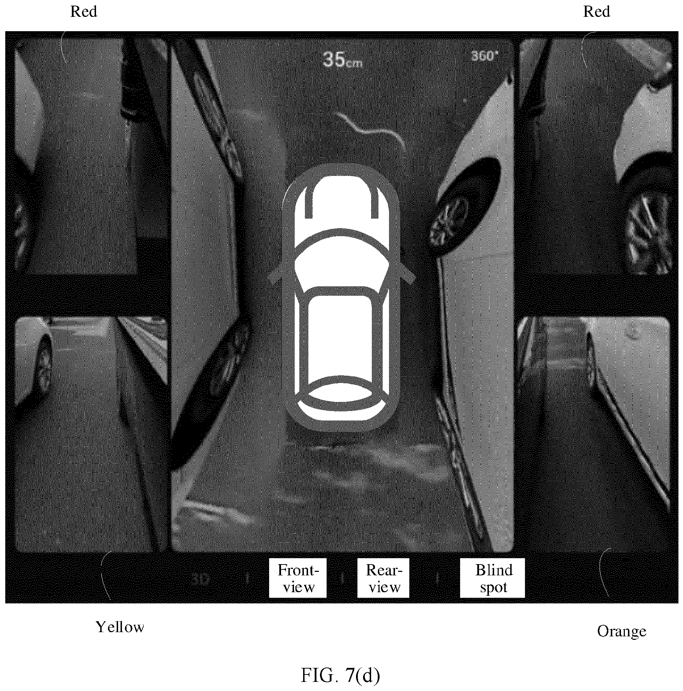

In addition, the reminding information in this embodiment of this application may be located at the boundary of the display area in which the image is located. For example, boundaries of images shown in the following FIG. 7(a), FIG. 7(b), FIG. 7(c), and FIG. 7(d) may further include breathing lights that display different colors.

In some embodiments, the reminding information may not be located at the boundary of the display area in which the image is located, or the reminding information may fill the entire display area in which the image is located. This is not limited.

Certainly, in some embodiments, the reminding information may alternatively be text or the like. For example, text such as "high", "second high", or "low" may be displayed below a corresponding image. For example, if a collision risk degree of a left front tire is higher than a collision risk degree of a right front tire, "high" may be displayed below an image corresponding to the left front tire, and "second high" may be displayed below an image corresponding to the right front tire. Optionally, the text may also be highlighted to effectively draw attention of a driver.

According to the solution provided in this embodiment of this application, the reminding information is located at the boundary of the display area in which the image is located, and the reminding information includes breathing lights of different colors, so that attention of a driver can be effectively drawn, to help the driver immediately perceive an importance degree of a collision risk existing around the vehicle, thereby facilitating safe driving of the driver.

Optionally, in some embodiments, the reminding information is related to collision information, the collision information includes an expansion coefficient of the obstacle, and the expansion coefficient is related to a relative speed between the vehicle and the obstacle and a type of the obstacle.

Optionally, in some embodiments, a larger relative speed between the vehicle and the obstacle indicates a larger expansion coefficient, and a smaller relative speed between the vehicle and the obstacle indicates a smaller expansion coefficient.

In this embodiment of this application, a relationship between an expansion coefficient and each of a relative speed between a vehicle and an obstacle and a type of the obstacle may be represented by using the following formula:

$$S = f(v) * n$$

$S$ is the expansion coefficient; $f(v)$ is a relational expression related to the relative speed between the vehicle and the obstacle, and is in a direct proportion relationship; and *n* is the type of the obstacle, and usually may be 2 to 10.

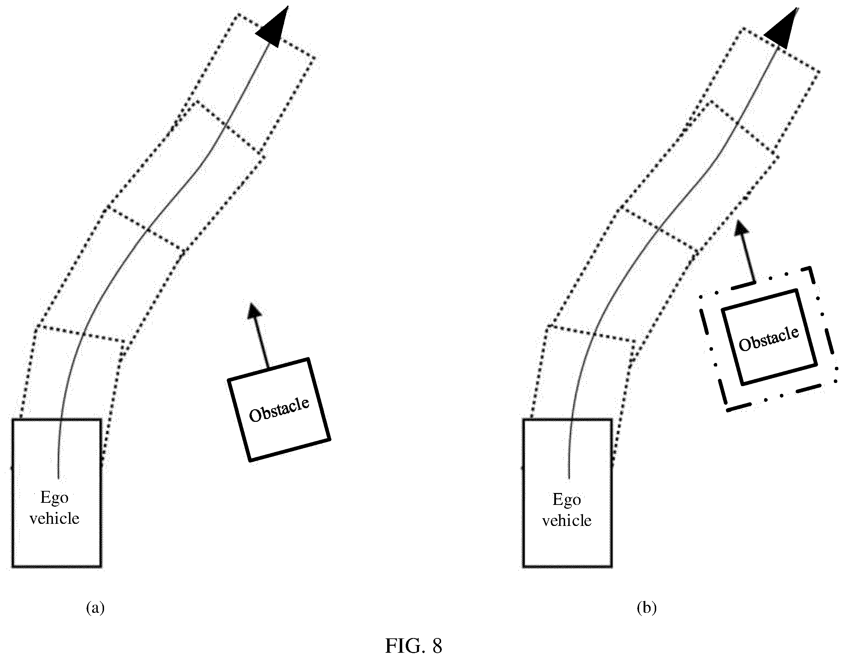

FIG. 8 is a schematic diagram of an obstacle before and after expansion relative to an ego vehicle according to an embodiment of this application, where (a) in FIG. 8 is a schematic diagram of an obstacle before expansion relative to the ego vehicle, and (b) in FIG. 8 is a schematic diagram of an obstacle after expansion relative to the ego vehicle.

Refer to (a) in FIG. 8, the ego vehicle travels in a direction indicated by an arrow of the ego vehicle, and there is a series of rectangular boxes formed by dotted lines around a track of the ego vehicle. The rectangular box may be understood as a contour envelope of the ego vehicle in a traveling process. An obstacle is located on a right side of the ego vehicle, and the obstacle moves in a direction indicated by an arrow of the obstacle. When the ego vehicle approaches the obstacle, if a relative speed between the ego vehicle and the obstacle is large, an expansion coefficient is larger; or if the relative speed between the ego vehicle and the obstacle is small, the expansion coefficient is smaller. When the ego vehicle is moving away from the obstacle, regardless of whether the relative speed between the ego vehicle and the obstacle is large or small, because the ego vehicle is moving away from the obstacle, a risk of damage caused by the obstacle to the ego vehicle becomes smaller. Therefore, in the scenario in which the ego vehicle is moving away from the obstacle, the expansion coefficient becomes smaller.

Refer to (b) in FIG. 8, compared with (a) in FIG. 8, there is an additional rectangular box formed by double-dashed lines around the obstacle, and the rectangular box may be understood as an expanded obstacle. To be specific, when the ego vehicle approaches the obstacle, the obstacle may be amplified by using the expansion coefficient, to remind the ego vehicle of a risk of collision with the obstacle. Further, the ego vehicle may perform a corresponding operation, for example, slow down a vehicle speed or move away from the obstacle as far as possible.

In some other embodiments, a speed (the speed is relative to the ground) of the obstacle may be 0, and the obstacle is in a static state relative to the ground. The relative speed between the ego vehicle and the obstacle still exists. Therefore, the obstacle may also be amplified by using the expansion coefficient, to remind the ego vehicle of a risk of collision with the obstacle.

In this embodiment of this application, if the obstacle is in a static state, for example, the obstacle is of a building type, n may be 2; if the obstacle is in a dynamic state and a speed of the obstacle is small, for example, the obstacle is a walking person, n may be 5; or if the speed of the obstacle is large, for example, the obstacle is a traveling vehicle, n may be 10.

Optionally, in some embodiments, a ratio of the first distance to the expansion coefficient is a second distance, and when the second distance is less than a third threshold and is greater than or equal to a fourth threshold, the reminding information includes a breathing light of a first color;

> when the second distance is less than the fourth threshold and is greater than or equal to a fifth threshold, the reminding information includes a breathing light of a second color; or
> when the second distance is less than the fifth threshold, the reminding information includes a breathing light of a third color.

In this embodiment of this application, the second distance is the ratio of the first distance to the expansion coefficient. The second distance may be understood as a distance that is between a tire and an obstacle and that is displayed on the central display screen. The vehicle may determine a collision risk degree between the vehicle and the obstacle based on this.

In this embodiment of this application, the first distance is an actual distance between the vehicle and an obstacle. It is assumed that a speed of the vehicle is 5 m/s, a distance between a tire of the vehicle and the obstacle is an actual distance of 200 cm, and the obstacle is in a static state. In this case, the expansion coefficient may be:

$$S = f(5) * 2$$

Assuming that S=5, the second distance is $200 \div 5 = 40$ cm. Further, according to Table 1, a boundary of an image corresponding to the tire may include an orange breathing light. Assuming that S=10, the second distance is $200 \div 10 = 20$ cm. Further, according to Table 1, a boundary of an image corresponding to the tire may include a red breathing light.

It may be understood that, for an actual distance between a specific tire of the vehicle and an obstacle, if a larger expansion coefficient indicates a smaller calculated second distance, it indicates that a collision risk degree on a side of the tire is higher, and a driver may pay more attention to a situation on the side, to improve safety of a collision risk on the side of the tire.

The reminding information in this embodiment of this application may be located at a boundary of a display area in which an image is located, for example, boundaries of four images shown in FIG. 5(b).

The following describes content related to the reminding information with reference to specific embodiments.

FIG. 7(a) to FIG. 7(d) show a group of GUIs according to an embodiment of this application, where FIG. 7(a) and FIG. 7(b) respectively show images displayed on the central display screen when the vehicle is in a forward state and a backward state, FIG. 7(c) shows an image displayed on the central display screen when the vehicle approaches a road edge, and FIG. 7(d) shows an image displayed on the central display screen when the vehicle passes through a narrow-road scenario.

Refer to FIG. 7(a), it can be learned that in this case, the vehicle is in a D gear, the vehicle is in a forward state, and both a left front tire and a right front tire of the vehicle are about to approach an obstacle. Therefore, the central display screen may display images of the tires on the two sides. In addition, a distance between the left front tire of the vehicle and the obstacle is shorter (for example, less than the fifth threshold in this application), and a collision risk degree of the left front tire is higher. Therefore, a boundary of an image of the left front tire of the vehicle includes a breathing light that displays the third color, for example, includes a breathing light that displays a red color. A distance between the right front tire of the vehicle and the obstacle comes to the second (for example, less than the fourth threshold and greater than the fifth threshold), and a collision risk degree of the right front tire comes to the second. Therefore, a boundary of an image of the right front tire of the vehicle includes a breathing light that displays the second color, for example, includes a breathing light that displays an orange color.

Refer to FIG. 7(b), it can be learned that in this case, the vehicle is in an R gear, the vehicle is in a backward state, and a left rear tire of the vehicle is about to approach an obstacle. Therefore, the central display screen may display images of the tires on the two sides. It is assumed that a distance between the left rear tire and the obstacle is less than the fourth threshold and greater than the fifth threshold, and a collision risk degree of the left rear tire comes to the second. Therefore, a boundary of an image of the left rear tire of the vehicle may include a breathing light that displays the second color, for example, include a breathing light that displays an orange color.

Refer to FIG. 7(c), it can be learned that in this case, the vehicle is close to a road edge on a right side, and both the right front tire and a right rear tire of the vehicle are about to approach an obstacle. Therefore, the central display screen may display images of tires on the right side, or may display images of two sides (as shown in the figure). It is assumed that a distance between the right front tire and the obstacle is less than the fifth threshold, and a collision risk degree of the right front tire is higher. Therefore, a boundary of an image of the right front tire of the vehicle includes a breathing light that displays the third color, for example, includes a breathing light that displays a red color. It is assumed that a distance between the right rear tire and the obstacle is less than the fourth threshold and greater than the fifth threshold, and a collision risk degree of the right rear tire comes to the second. Therefore, a boundary of an image of the right rear tire of the vehicle may include a breathing light that displays the second color, for example, include a breathing light that displays an orange color.

Refer to FIG. 7(d), it can be learned that in this case, there are other vehicles traveling around the vehicle, and there are obstacles beside four tires of the vehicle. Therefore, the central display screen may display images of two sides. Similarly, based on a distance between each tire and an obstacle, boundaries of images of the left front tire and the right front tire each include a breathing light that displays a red color, a boundary of an image of the left rear tire includes a breathing light that displays a yellow color, and a boundary of an image of the right rear tire includes a breathing light that displays an orange color.

In this embodiment of this application, in different directions, the third threshold, the fourth threshold, and the fifth threshold each may be the same or may be different. For details, refer to Table 1.

**Table 1**

| Reminding manner (distance range) | Rear distance (cm) | Front distance (cm) | Side distance (cm) |
|---|---|---|---|
| Yellow | 60 to 150 | 60 to 80 | 60 to 90 |
| Orange | 30 to 60 | 30 to 60 | 25 to 60 |
| Red | 0 to 30 | 0 to 30 | 0 to 25 |

For example, if the obstacle is located behind the vehicle, and the vehicle gradually approaches the obstacle, the third threshold in this application may be 150 cm, the fourth threshold may be 60 cm, and the fifth threshold may be 30 cm. If the obstacle is located in front of the vehicle, and the vehicle gradually approaches the obstacle, the third threshold in this application may be 80 cm, the fourth threshold may be 60 cm, and the fifth threshold may be 30 cm. If the obstacle is located on a side of the vehicle, and the vehicle gradually approaches the obstacle, the third threshold in this application may be 90 cm, the fourth threshold may be 60 cm, and the fifth threshold may be 25 cm.

It may be understood that, the foregoing values and corresponding colors are merely examples for description, and may alternatively be other values and colors, and should not constitute a special limitation on this application.

It is mentioned above that, the first distance includes an actual distance between each of the at least one tire and a corresponding obstacle, and the second distance may be a distance that is between each tire and a corresponding obstacle and that is displayed on the central display screen. In some embodiments, the first distance and/or the second distance may be distances of different meanings.

Optionally, in some embodiments, the first distance and/or the second distance are/is a projection distance, and the projection distance is a projection distance between each tire and the corresponding obstacle in a direction perpendicular to a central axis of the vehicle.

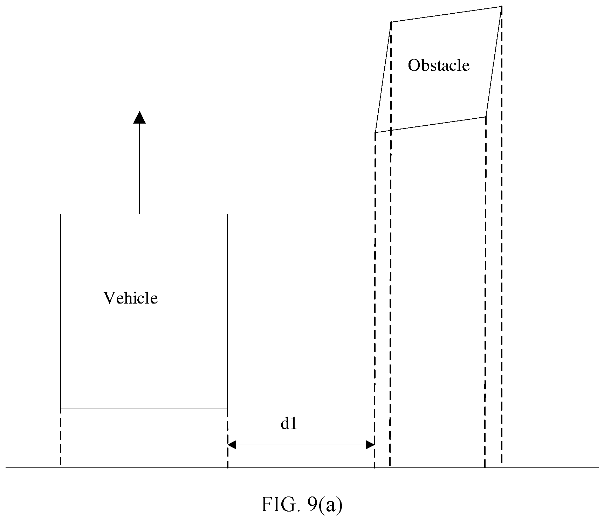

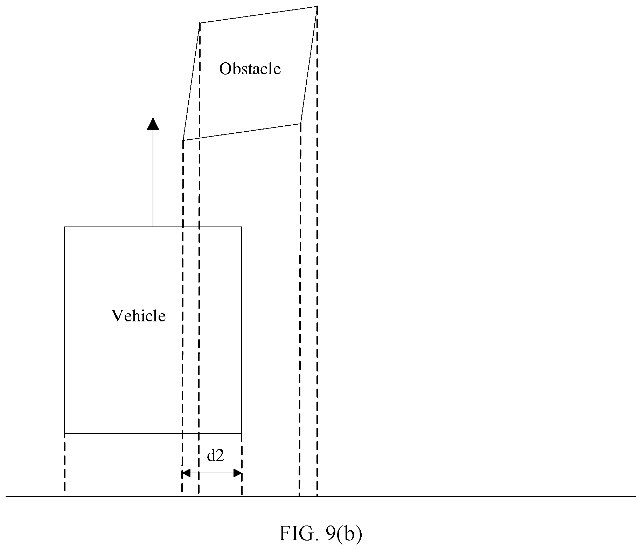

In this embodiment of this application, the first distance and/or the second distance may represent a projection distance between a tire and an obstacle, and the projection distance may be a spacing between projection of the obstacle and projection of the vehicle. FIG. 9(a) and FIG. 9(b) are schematic diagrams of projection of an obstacle and projection of a vehicle according to an embodiment of this application.

Refer to FIG. 9(a), it can be learned that there is no overlapping between projection of the vehicle and projection of the obstacle in a direction perpendicular to a central axis of the vehicle, and a minimum spacing is d1. Therefore, if the vehicle travels in an arrow direction shown in the figure, the vehicle does not touch the obstacle.

Refer to FIG. 9(b), it can be learned that there is overlapping between the projection of the vehicle and the projection of the obstacle in the direction perpendicular to the central axis of the vehicle, and a width of an overlapped part is d2. Therefore, if the vehicle in the figure travels in an arrow direction shown in the figure, the vehicle touches the obstacle.

According to the solution provided in this embodiment of this application, the first distance and/or the second distance may be the projection distance, which can further improve precision of evaluating a risk of collision between the vehicle and the obstacle, to reduce a possibility of collision.

Based on this, the foregoing describes related content of the reminding information included in the image. In some embodiments, to safely pass through a complex environment, a driver may further perform an operation.

Optionally, in some embodiments, the method 600 further includes:

displaying, in a zoom-in manner, an image with a highest collision risk degree, where the image with a highest collision risk degree includes an image with a smallest first distance in the image.

In this embodiment of this application, an example in which an image is displayed on the central display screen of the vehicle is still used. After the image is displayed on the central display screen of the vehicle, if the vehicle is a manually driven vehicle, a driver may amplify, based on the image, an image with a highest collision risk degree.

For example, as shown in FIG. 5(b), assuming that the driver determines that a collision risk degree of the left front tire is high, the driver may tap the image in the upper left part. After detecting an operation of tapping the icon 501 by the driver, the vehicle may display the GUI shown in FIG. 5(c).

For another example, as shown in FIG. 7(a), the boundary of the image of the left front tire of the vehicle includes a breathing light that displays a red color, and the boundary of the image of the right front tire of the vehicle includes a breathing light that displays an orange color. According to Table 1, the driver may determine that a collision risk degree of the left front tire is the highest. Therefore, the driver may zoom in an image in an upper left part, that is, the image corresponding to the left front tire.

According to the solution provided in this embodiment of this application, the image with a highest collision risk degree is displayed in a zoom-in manner, to help a driver more precisely learn of an environment with a highest collision risk degree around the vehicle. Further, the driver may perform a proper operation based on the zoomed-in image, to reduce a possibility of collision.

Optionally, in some embodiments, the central display screen further displays an inverse perspective mapping IPM image of the vehicle; and

a location at which the image that is of the at least one tire and the corresponding obstacle and that is displayed in the image is located is in a one-to-one correspondence with a location of at least one tire of the vehicle in the IPM image.

Optionally, in some embodiments, an image displayed in an upper left corner of the central display screen corresponds to an image of an upper left tire of the vehicle;

an image displayed in a lower left corner of the central display screen corresponds to an image of a lower left tire of the vehicle;

an image displayed in an upper right corner of the central display screen corresponds to an image of an upper right tire of the vehicle; and

an image displayed in a lower right corner of the central display screen corresponds to an image of a lower right tire of the vehicle.

The IPM image in this embodiment of this application may be the image of the vehicle shown in FIG. 5(b). In addition, the location at which the image that is of the at least one tire and the corresponding obstacle and that is displayed in the image is located is in a one-to-one correspondence with a location of a tire of the vehicle in the IPM image.

Refer to FIG. 5(b), an image displayed in an upper left corner corresponds to an image of an upper left tire of the vehicle (that is, a left front tire of the vehicle), an image displayed in an upper right corner corresponds to an image of an upper right tire of the vehicle (that is, a right front tire of the vehicle), an image displayed in a lower left corner corresponds to an image of a lower left tire of the vehicle (that is, a left rear tire of the vehicle), and an image displayed in a lower right corner corresponds to an image of a lower right tire of the vehicle (that is, a right rear tire of the vehicle), so that a driver can clearly see the image corresponding to the tire, to further facilitate a subsequent operation based on the image.

Optionally, in some embodiments, the method 600 further includes:

exiting display of the image when the first distance is greater than or equal to the second threshold, and duration for displaying the image is greater than first duration.

For the second threshold in this embodiment of this application, refer to Table 1. The first duration may be 5s, 8s, or the like. This is not limited.

In this embodiment of this application, if the vehicle is a self-driving vehicle, regardless of whether the image is displayed, the vehicle can perform an operation based on the image, to safely bypass the obstacle. If the image is displayed, the vehicle may automatically exit display of the image after safely bypassing the obstacle.

If the vehicle is a manually driven vehicle, after safely bypassing the obstacle, the vehicle may automatically exit display of the image, or a driver may perform a manual operation to exit display of the image. For example, the driver may tap an icon "×" displayed in FIG. 5(c).

According to the solution provided in this embodiment of this application, display of the image exits when the first distance is greater than or equal to the second threshold, and the duration for displaying the image is greater than the first duration, so that power consumption of the vehicle can be reduced. In addition, this helps a driver perform another operation.

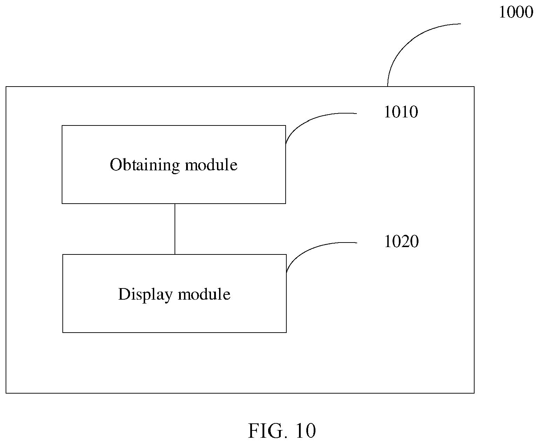

FIG. 10 is a schematic block diagram of a control apparatus 1000 according to an embodiment of this application. The control apparatus 1000 shown in FIG. 10 includes an obtaining module 1010 and a display module 1020.

The obtaining module 1010 and the display module 1020 may be configured to perform the anti-collision method in the embodiments of this application, for example, the method 600.

The obtaining module 1010 may be configured to obtain a speed of a vehicle and a first distance between at least one tire of the vehicle and an obstacle, where the first distance includes an actual distance between each of the at least one tire and a corresponding obstacle.

The display module 1002 may be configured to display an image when the speed of the vehicle is less than a first threshold and the first distance is less than a second threshold, where the image includes an image of the at least one tire and the corresponding obstacle.

It should be noted that, a core apparatus of the foregoing module (including the obtaining module 1010 and the display module 1020) is a software algorithm, and may be implemented independently, or may form a solution in cooperation with other modules. However, as any submodule, the module cannot implement a complete product separately, and needs to be sequentially cooperated with other modules to form a complete software algorithm or a software and hardware solution.

Optionally, in some embodiments, the display module 1020 is specifically configured to:

if the corresponding obstacle is located on two sides of the vehicle, display images of the two sides of the vehicle; or
if the corresponding obstacle is located on one side of the vehicle, and a height of a chassis of the vehicle is less than a height of the corresponding obstacle, display an image of one side of the vehicle.

Optionally, in some embodiments, the display module 1020 is specifically configured to:

when the speed of the vehicle is less than the first threshold and the first distance is less than the second threshold, adjust a photographing apparatus configured on the vehicle to shoot each tire and the corresponding obstacle; and display the image based on a shot image of each tire and the corresponding obstacle.

Optionally, in some embodiments, the image further includes reminding information, and the reminding information indicates a collision risk degree of the at least one tire.

Optionally, in some embodiments, the reminding information is located at a boundary of a display area in which the image is located, and the reminding information includes breathing lights of different colors.

Optionally, in some embodiments, the reminding information is related to collision information, the collision information includes an expansion coefficient of the obstacle, and the expansion coefficient is related to a relative speed between the vehicle and the obstacle and a type of the obstacle.

Optionally, in some embodiments, a larger relative speed between the vehicle and the obstacle indicates a larger expansion coefficient, and a smaller relative speed between the vehicle and the obstacle indicates a smaller expansion coefficient.

Optionally, in some embodiments, a ratio of the first distance to the expansion coefficient is a second distance, and when the second distance is less than a third threshold and is greater than or equal to a fourth threshold, the reminding information includes a breathing light of a first color;

when the second distance is less than the fourth threshold and is greater than or equal to a fifth threshold, the reminding information includes a breathing light of a second color; or
when the second distance is less than the fifth threshold, the reminding information includes a breathing light of a third color.

Optionally, in some embodiments, the first distance and/or the second distance are/is a projection distance, and the projection distance is a projection distance between each tire and the corresponding obstacle in a direction perpendicular to a central axis of the vehicle.

Optionally, in some embodiments, the display module 1020 is specifically configured to:
display, in a zoom-in manner, an image with a highest collision risk degree, where the image with a highest collision risk degree includes an image with a smallest first distance in the image.

Optionally, in some embodiments, the display module 1020 is further configured to display an inverse perspective mapping IPM image of the vehicle; and
a location at which the image that is of the at least one tire and the corresponding obstacle and that is displayed in the image is located is in a one-to-one correspondence with a location of at least one tire of the vehicle in the IPM image.

Optionally, in some embodiments, the display module 1020 is located on a central display screen of the vehicle.

Optionally, in some embodiments, an image displayed in an upper left corner of the central display screen corresponds to an image of an upper left tire of the vehicle;

an image displayed in a lower left corner of the central display screen corresponds to an image of a lower left tire of the vehicle;
an image displayed in an upper right corner of the central display screen corresponds to an image of an upper right tire of the vehicle; and
an image displayed in a lower right corner of the central display screen corresponds to an image of a lower right tire of the vehicle.

Optionally, in some embodiments, the apparatus 1000 further includes an exiting module, and the exiting module is configured to exit display of the image when the first distance is greater than or equal to the second threshold, and duration for displaying the image is greater than first duration.

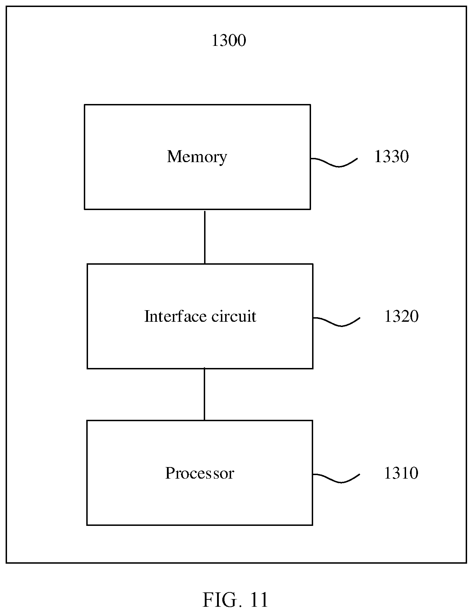

FIG. 11 is a schematic diagram of a structure of a controller 1300 according to an embodiment of this application.

The controller 1300 includes at least one processor 1310 and an interface circuit 1320. Optionally, the controller 1300 may further include a memory 1330, and the memory 1330 is configured to store a program.

When the program is run in the at least one processor 1310, the at least one processor 1310 is configured to perform the anti-collision method described above.

In a design, based on function division, the control apparatus may include a plurality of processors, different processors perform different control functions, and the plurality of processors communicate with a processor that performs central control, to perform information and data communication with the processor. For example, a first processor is configured to obtain a speed of a vehicle and a first distance between at least one tire of the vehicle and an obstacle, and a second processor is configured to display an image when a condition is met.

These processors may be various types of processors, integrated circuits, field programmable gate arrays FPGAs, or in other forms. This is not specifically limited in this application, provided that the processor is integrated on a chip in a composition form that can implement the foregoing functions. For ease of description, a processing unit may also be referred to as a processor. Further, the foregoing processing units may be integrated into one chip or distributed on a plurality of chips. This is not specifically limited in this application, and depends on a specific design.

An embodiment of this application further provides a computer-readable storage medium. The computer-readable storage medium has program instructions. When the program instructions are directly or indirectly executed, the method described above is implemented.

An embodiment of this application further provides a computer program product including instructions. When the computer program product is run on a computing device, the computing device is enabled to perform the method described above, or the computing device is enabled to implement a function of the apparatus described above.

An embodiment of this application further provides a chip system. The chip system includes at least one processing unit and an interface circuit. The interface circuit is configured to provide program instructions or data for the at least one processing unit, and the at least one processor is configured to execute the program instructions to implement the method described above.

An embodiment of this application further provides a terminal, including the control apparatus, the controller, or the chip that is described above. Further, the terminal may be an intelligent transportation device (a vehicle or an unscrewed aerial vehicle), a smart home device, an intelligent manufacturing device, a surveying and mapping device, a robot, or the like. The intelligent transportation device may be, for example, an automated guided vehicle (automated guided vehicle, AGV) or an unscrewed aerial vehicle.

A person of ordinary skill in the art may be aware that, the units, the modules, and the algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A skilled person may use different methods to implement the described functions for each particular application, but this implementation should not be considered as beyond the scope of this application.

It may be clearly understood by a person skilled in the art that, for convenient and brief description, for specific working processes of the system, apparatus, and unit described above, refer to corresponding processes in the foregoing method embodiments. Details are not described herein again.

In the several embodiments provided in this application, it should be understood that the disclosed system, apparatus, and method may be implemented in other manners. For example, the apparatus embodiments described above are merely examples. For example, division of the units is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

When the function is implemented in a form of a software functional unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  An anti-collision method, wherein the method is applied to a vehicle, and comprises:

    obtaining a speed of the vehicle and a first distance between at least one tire of the vehicle and an obstacle, wherein the first distance comprises an actual distance between each of the at least one tire and a corresponding obstacle; and
    displaying an image on the vehicle when the speed of the vehicle is less than a first threshold and the first distance is less than a second threshold, wherein the image comprises an image of the at least one tire and the corresponding obstacle.

2.  The method according to claim 1, wherein the displaying an image on the vehicle comprises:

    if the corresponding obstacle is located on two sides of the vehicle, displaying images of the two sides of the vehicle on the vehicle; or
    if the corresponding obstacle is located on one side of the vehicle, and a height of a chassis of the vehicle is less than a height of the corresponding obstacle, displaying an image of one side of the vehicle on the vehicle.

3.  The method according to claim 1 or 2, wherein the displaying an image on the vehicle when the speed of the vehicle is less than a first threshold and the first distance is less than a second threshold comprises:

when the speed of the vehicle is less than the first threshold and the first distance is less than the second threshold, adjusting a photographing apparatus configured on the vehicle to shoot each tire and the corresponding obstacle; and

displaying the image on the vehicle based on a shot image of each tire and the corresponding obstacle.

4. The method according to any one of claims 1 to 3, wherein the image further comprises reminding information, and the reminding information indicates a collision risk degree of the at least one tire.

5. The method according to claim 4, wherein the reminding information is located at a boundary of a display area in which the image is located, and the reminding information comprises breathing lights of different colors.

6. The method according to claim 4 or 5, wherein the reminding information is related to collision information, the collision information comprises an expansion coefficient of the obstacle, and the expansion coefficient is related to a relative speed between the vehicle and the obstacle and a type of the obstacle.

7. The method according to claim 6, wherein a larger relative speed between the vehicle and the obstacle indicates a larger expansion coefficient, and a smaller relative speed between the vehicle and the obstacle indicates a smaller expansion coefficient.

8. The method according to claim 6 or 7, wherein a ratio of the first distance to the expansion coefficient is a second distance, and when the second distance is less than a third threshold and is greater than or equal to a fourth threshold, the reminding information comprises a breathing light of a first color;

   when the second distance is less than the fourth threshold and is greater than or equal to a fifth threshold, the reminding information comprises a breathing light of a second color; or
   when the second distance is less than the fifth threshold, the reminding information comprises a breathing light of a third color.

9. The method according to claim 8, wherein the first distance and/or the second distance are/is a projection distance, and the projection distance is a projection distance between each tire and the corresponding obstacle in a direction perpendicular to a central axis of the vehicle.

10. The method according to any one of claims 4 to 9, wherein the method further comprises:
    displaying, in a zoom-in manner, an image with a highest collision risk degree, wherein the image with a highest collision risk degree comprises an image with a smallest first distance in the image.

11. The method according to any one of claims 1 to 10, wherein the displaying an image on the vehicle comprises:
    displaying the image on a central display screen of the vehicle.

12. The method according to claim 11, wherein the central display screen furtherdisplays an

    IPM image of the vehicle; and
    a location at which the image that is of the at least one tire and the corresponding obstacle and that is displayed in the image is located is in a one-to-one correspondence with a location of at least one tire of the vehicle in the IPM image.

13. The method according to claim 12, wherein an image displayed in an upper left corner of the central display screen corresponds to an image of an upper left tire of the vehicle;

    an image displayed in a lower left corner of the central display screen corresponds to an image of a lower left tire of the vehicle;
    an image displayed in an upper right corner of the central display screen corresponds to an image of an upper right tire of the vehicle; and
    an image displayed in a lower right corner of the central display screen corresponds to an image of a lower right tire of the vehicle.

14. The method according to any one of claims 1 to 13, wherein the method further comprises:
    exiting display of the image when the first distance is greater than or equal to the second threshold, and duration for displaying the image is greater than first duration.

15. A control apparatus, comprising a module configured to perform the method according to any one of claims 1 to 14.

16. A controller, comprising at least one memory and at least one processor, wherein the at least one memory is configured to store a program, and the at least one processor is configured to run the program to implement the method according to any one of claims 1 to 14.

17. A chip, comprising at least one processing unit and an interface circuit, wherein the interface circuit is configured to provide program instructions or data for the at least one processing unit, and the at least one processing unit is configured to execute the program instructions to implement the method according to any one of claims 1 to 14.

18. A computer-readable storage medium, wherein the computer-readable medium stores program code used to be executed by a device, and when the program code is executed by the device, the method according to any one of claims 1 to 14 is implemented.

19. A terminal, wherein the terminal comprises the control apparatus according to claim 15, or the controller according to claim 16, or the chip according to claim 17.

20. The terminal according to claim 19, wherein the terminal is an intelligent transportation device.

EP 4 365 052 A1

Vehicle 100

Traveling system 110

Engine 111

Transmission apparatus 112

Energy source 113

Wheel 114

Sensing system 120

Positioning system 121

Inertial measurement unit 122

Radar 123

Laser rangefinder 124

Camera 125

Vehicle speed sensor 126

Control system 130

Steering system 131

Throttle 132

Braking unit 133

Computer vision system 134

Route control system 135

Obstacle avoidance system 136

Peripheral device 140

Wireless communications system 141

Vehicle-mounted computer 142

Microphone 143

Speaker 144

Processor 151

Instruction 153

Memory 152

Computer system 150

Power supply 160

User interface 170

FIG. 1

FIG. 2

FIG. 3

EP 4 365 052 A1

FIG. 4

FIG. 5(a)

FIG. 5(b)

FIG. 5(c)

600

Obtain a speed of a vehicle and a first distance between at least one tire of the vehicle and an obstacle, where the first distance includes an actual distance between each of the at least one tire and a corresponding obstacle
— S610

Display an image on the vehicle when the speed of the vehicle is less than a first threshold and the first distance is less than a second threshold, where the image includes an image of the at least one tire and the corresponding obstacle
— S620

FIG. 6

Red                                    Orange

FIG. 7(a)

Orange

FIG. 7(b)

FIG. 7(c)

FIG. 7(d)

(a)

(b)

FIG. 8

EP 4 365 052 A1

FIG. 9(a)

Obstacle

Vehicle

d2

FIG. 9(b)

1000

Obtaining module — 1010

Display module — 1020

FIG. 10

1300

Memory 1330

Interface circuit 1320

Processor 1310

FIG. 11

## INTERNATIONAL SEARCH REPORT

| | International application No. |
|---|---|
| | **PCT/CN2021/112170** |

**A. CLASSIFICATION OF SUBJECT MATTER**

B60W 50/14(2020.01)i; B60R 1/00(2022.01)i; B60W 30/08(2012.01)i; B60W 40/02(2006.01)i; G06K 9/00(2022.01)i; G08G 1/16(2006.01)i; G06T 1/00(2006.01)i; H04N 7/18(2006.01)i

According to International Patent Classification (IPC) or to both national classification and IPC

**B. FIELDS SEARCHED**

Minimum documentation searched (classification system followed by classification symbols)

B60W; B60R; G06K; G08G; G06T; H04N

Documentation searched other than minimum documentation to the extent that such documents are included in the fields searched

Electronic data base consulted during the international search (name of data base and, where practicable, search terms used)

CNABS; CNTXT; VEN; CNKI; WPABS; ENTXT: 华为技术, 碰撞, 障碍物, 辅助, 控制, 驾驶, 速度, 距离, 轮胎, 车轮, 显示, 中控, 屏, 预警, 警报, 指示, 避障, 避让, 底盘, 高度, 膨胀, 图像, 视觉, 画面, 影像, vehicle?, car?, optical, view, control, inform+, warn+, intervent+, image?, assistance, safe+, alarm

**C. DOCUMENTS CONSIDERED TO BE RELEVANT**

| Category* | Citation of document, with indication, where appropriate, of the relevant passages | Relevant to claim No. |
|---|---|---|
| X | CN 108583435 A (BEIJING ELECTRIC VEHICLE CO., LTD.) 28 September 2018 (2018-09-28) <br> description, paragraphs [0006]-[0115], and figures 1-8 | 1, 3, 11-20 |
| X | CN 112644512 A (TOYOTA MOTOR CORP.) 13 April 2021 (2021-04-13) <br> description, paragraphs [0006]-[0089], and figures 1-8 | 1, 3-5, 10-20 |
| X | CN 107054223 A (CHONGQING CHANG'AN AUTOMOBILE CO., LTD.) 18 August 2017 (2017-08-18) <br> description, paragraphs [0006]-[0039], and figures 1-3 | 1, 3, 11-20 |
| X | CN 111731188 A (CHINA FIRST AUTOMOBILE WORKS GROUP CO., LTD.) 02 October 2020 (2020-10-02) <br> description, paragraphs [0005]-[0041], and figures 1-5 | 1, 3, 11-20 |
| Y | CN 111731188 A (CHINA FIRST AUTOMOBILE WORKS GROUP CO., LTD.) 02 October 2020 (2020-10-02) <br> description, paragraphs [0005]-[0041], and figures 1-5 | 2-5, 10-20 |
| Y | CN 105966538 A (SHANG YANYAN) 28 September 2016 (2016-09-28) <br> description, paragraphs [0007]-[0042], and figures 1-3 | 2-5, 10-20 |

☑ Further documents are listed in the continuation of Box C.    ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 March 2022** | **18 March 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/112170** |

**C.      DOCUMENTS CONSIDERED TO BE RELEVANT**

| Category* | Citation of document, with indication, where appropriate, of the relevant passages | Relevant to claim No. |
| --- | --- | --- |
| Y | CN 112644512 A (TOYOTA MOTOR CORP.) 13 April 2021 (2021-04-13) description, paragraphs [0006]-[0089], and figures 1-8 | 4, 5, 10-20 |
| A | CN 102529830 A (HUA-CHUANG AUTOMOBILE INFORMATION TECHNICAL CENTER CO., LTD.) 04 July 2012 (2012-07-04) entire document | 1-20 |
| A | CN 110641366 A (AIWAYS AUTOMOBILE CO., LTD.) 03 January 2020 (2020-01-03) entire document | 1-20 |
| A | CN 107924635 A (MAZDA MOTOR) 17 April 2018 (2018-04-17) entire document | 1-20 |
| A | CN 108216023 A (TOYOTA MOTOR CORP.) 29 June 2018 (2018-06-29) entire document | 1-20 |
| A | CN 107009964 A (JILIN ENGINEERING NORMAL UNIVERSITY) 04 August 2017 (2017-08-04) entire document | 1-20 |
| A | CN 111231827 A (JIANGSU UNIVERSITY) 05 June 2020 (2020-06-05) entire document | 1-20 |
| A | JP 2005343351 A (OLYMPUS CORP.) 15 December 2005 (2005-12-15) entire document | 1-20 |

Form PCT/ISA/210 (second sheet) (January 2015)

**INTERNATIONAL SEARCH REPORT**
Information on patent family members

| International application No. |
| --- |
| **PCT/CN2021/112170** |

| Patent document cited in search report | | | Publication date (day/month/year) | Patent family member(s) | | | Publication date (day/month/year) |
| --- | --- | --- | --- | --- | --- | --- | --- |
| CN | 108583435 | A | 28 September 2018 | None | | | |
| CN | 112644512 | A | 13 April 2021 | US | 2021107506 | A1 | 15 April 2021 |
| | | | | JP | 2021064084 | A | 22 April 2021 |
| CN | 107054223 | A | 18 August 2017 | None | | | |
| CN | 111731188 | A | 02 October 2020 | None | | | |
| CN | 105966538 | A | 28 September 2016 | CN | 105966538 | B | 07 December 2018 |
| CN | 102529830 | A | 04 July 2012 | TW | 201226243 | A | 01 July 2012 |
| | | | | TW | I421182 | B | 01 January 2014 |
| | | | | CN | 102529830 | B | 20 May 2015 |
| CN | 110641366 | A | 03 January 2020 | CN | 110641366 | B | 19 October 2021 |
| CN | 107924635 | A | 17 April 2018 | WO | 2017154491 | A1 | 14 September 2017 |
| | | | | JP | 2017162015 | A | 14 September 2017 |
| | | | | JP | 6390645 | B2 | 19 September 2018 |
| | | | | DE | 112017000707 | T5 | 31 October 2018 |
| | | | | US | 2018265004 | A1 | 20 September 2018 |
| CN | 108216023 | A | 29 June 2018 | DE | 102017129852 | A1 | 21 June 2018 |
| | | | | JP | 2018097704 | A | 21 June 2018 |
| | | | | JP | 6551377 | B2 | 31 July 2019 |
| | | | | US | 2018170257 | A1 | 21 June 2018 |
| | | | | US | 10710502 | B2 | 14 July 2020 |
| | | | | CN | 108216023 | B | 05 February 2021 |
| CN | 107009964 | A | 04 August 2017 | CN | 107009964 | B | 15 February 2019 |
| CN | 111231827 | A | 05 June 2020 | None | | | |
| JP | 2005343351 | A | 15 December 2005 | None | | | |

Form PCT/ISA/210 (patent family annex) (January 2015)